# EUROPEAN PATENT SPECIFICATION

(11) **EP 3 323 850 B1**
(45) Date of publication and mention of the grant of the patent: **11.11.2020**
(21) Application number: 16824350.9
(22) Date of filing: 06.07.2016
(51) Int. Cl.: C08L 9/02, C08F 236/12, C08K 3/36, C08K 5/17, C08K 5/54, C08L 15/00

(54) **NITRILE RUBBER COMPOSITION AND CROSS-LINKED RUBBER**
NITRILKAUTSCHUKZUSAMMENSETZUNG UND VERNETZTER KAUTSCHUK
COMPOSITION DE CAOUTCHOUC NITRILE ET PRODUIT DE CAOUTCHOUC RÉTICULÉ

(30) Priority: 15.07.2015 JP 2015141140; 29.01.2016 JP 2016015788
(43) Date of publication of application: 23.05.2018
(73) Proprietor: Zeon Corporation, Tokyo 100-8246 (JP)
(72) Inventor: MOSAKI, Shiho, Tokyo 100-8246 (JP)
(74) Representative: Maiwald Patent- und Rechtsanwaltsgesellschaft mbH
(86) International application number: PCT/JP2016/069997
(87) International publication number: WO 2017/010370

(56) References cited:
- EP-A1- 2 009 050
- EP-A1- 2 145 920
- EP-A1- 2 660 285
- EP-A1- 2 857 447
- EP-A1- 2 857 448
- EP-A1- 2 891 694
- WO-A1-2010/038720
- WO-A1-2013/175877
- WO-A1-2013/175878
- WO-A1-2014/050853
- JP-A- 2003 120 824
- US-A1- 2004 166 346
- US-A1- 2006 142 485

## Description

### TECHNICAL FIELD

The present invention relates to a nitrile rubber composition capable of giving a cross-linked rubber good in the original state physical properties and small in the dynamic heat generation, and a cross-linked rubber obtained by using such a nitrile rubber composition.

### BACKGROUND ART

Nitrile rubbers (acrylonitrile-butadiene copolymer rubbers) have hitherto been used, by taking advantage of the oil resistance, mechanical properties, chemical resistance and the like thereof, as the materials for vehicle rubber components such as hoses and tubes; hydrogenated nitrile rubbers (hydrogenated acrylonitrile-butadiene copolymer rubbers) obtained by hydrogenating the carbon-carbon double bonds in the polymer main chains of nitrile rubbers are more excellent in heat resistance, and accordingly are used as rubber components such as belts, hoses and diaphragms.

As such a nitrile rubber composition, for example, Patent Document 1 has disclosed a composition comprising a nitrile copolymer rubber (A) having an iodine value of 20 to 80, and a white carbon (B) having a specific surface area of 20 to 48 m²/g. A cross-linked rubber obtained by using the nitrile rubber composition disclosed in Patent Document 1 is good in the original state physical properties, but is large in the dynamic heat generation, and accordingly is sometimes inappropriate for applications involving the use in vibrating portions such as sealing applications involving the use in vibrating portions.

### RELATED ART

### PATENT DOCUMENTS

Patent Document 1: International Publication No. WO 2014/192844.

EP 2 145 920 A1 discloses a vulcanizable polymer composition which is characterized by a combination of a polyamine crosslinking agent and a particular crosslinking accelerator.

EP 2 857 448 A1 discloses a polyamine curable, highly saturated nitrile rubber composition comprising a polyamine curable, highly saturated nitrile rubber and an aliphatic carboxylic acid diester compound of polyalkylene glycol.

EP 2 857 447 A1 also discloses a polyamine curable, highly saturated nitrile rubber composition comprising a polyamine curable, highly saturated nitrile rubber and an aliphatic carboxylic acid diester compound of polyalkylene glycol.

EP 2 660 285 A1 discloses a nitrile rubber composition containing a carboxyl group-containing nitrile rubber and a reactive silicone oil.

EP 2 891 694 A1 discloses an adhesive composition containing a latex of a highly saturated nitrile rubber and a polyvalent amine compound.

EP 2 009 050 A1 discloses a cross-linkable nitrile rubber composition comprising a nitrile rubber, silica having CaO value determined by X-ray fluorescence composition analysis of 0.5 wt% or more, and a crosslinking agent.

US 2004/166346 A1 discloses a composition containing a hydrogenated nitrile-butadiene rubber (HNBR), a peroxide crosslinking system and a resorcinol-formaldehyde resin.

US 2006/142485 A1 discloses mixtures composed of ethylene-vinyl alcohol copolymers and of crosslinkable rubbers having reactive groups.

### SUMMARY OF THE INVENTION

### PROBLEM TO BE SOLVED BY THE INVENTION

The present invention was made in view of such a circumstance, and an object of the present invention is to provide a nitrile rubber composition capable of giving a cross-linked rubber good in the original state physical properties and small in the dynamic heat generation, and a cross-linked rubber obtained by using such a nitrile rubber composition.

### MEANS FOR SOLVING THE PROBLEM

The present inventors engaged in a diligent study to achieve the above object, and consequently have perfected the present invention by discovering that the above object can be achieved on the basis of a nitrile rubber composition obtained by including a silica having a specific surface area of less than 60 m²/g, a polyamine-based cross-linking agent and a trimellitic acid-based plasticizer in a carboxyl group-containing highly saturated nitrile rubber containing an α,β-ethylenically unsaturated nitrile monomer unit in a content of 5 to 60 wt% and having an iodine value of 120 or less.

Specifically, the present invention provides a nitrile rubber composition comprising a carboxyl group-containing highly saturated nitrile rubber (a) containing an α,β-ethylenically unsaturated nitrile monomer unit in a content of 5 to 60 wt% and having an iodine value of 120 or less, a silica (b) having a specific surface area of less than 60 m²/g, a polyamine-based cross-linking agent (c), and a trimellitic acid-based plasticizer, wherein a content of the polyamine-based cross-linking agent (c) is 0.1 to 20 parts by weight with respect to 100 parts by weight of the carboxyl group-containing highly saturated nitrile rubber (a).

In the nitrile rubber composition of the present invention, a content of the silica (b) is preferably 10 to 100 parts by weight with respect to 100 parts by weight of the carboxyl group-containing highly saturated nitrile rubber (a).

In the nitrile rubber composition of the present invention, the carboxyl group-containing highly saturated nitrile rubber (a) preferably contains 5 to 60 wt% of an α,β-ethylenically unsaturated nitrile monomer unit, 0.1 to 30 wt% of an α,β-ethylenically unsaturated dicarboxylic acid monoester monomer unit, and 10 to 80 wt% of a conjugated diene monomer unit.

The nitrile rubber composition of the present invention preferably further comprises a basic cross-linking accelerator.

The nitrile rubber composition of the present invention preferably further comprises a silane coupling agent (d).

The present invention also provides a cross-linked rubber obtained by cross-linking the nitrile rubber composition.

### EFFECTS OF INVENTION

The present invention can provide a nitrile rubber composition capable of giving a cross-linked rubber good in the original state physical properties and small in the dynamic heat generation, and a cross-linked rubber obtained by using such a nitrile rubber composition and good in the original state physical properties and small in the dynamic heat generation.

### DESCRIPTION OF EMBODIMENTS

A nitrile rubber composition comprises a carboxyl group-containing highly saturated nitrile rubber (a) containing an α,β-ethylenically unsaturated nitrile monomer unit in a content of 5 to 60 wt% and having an iodine value of 120 or less, a silica (b) having a specific surface area of less than 60 m²/g, a polyamine-based cross-linking agent (c), and a trimellitic acid-based plasticizer, wherein a content of the polyamine-based cross-linking agent (c) is 0.1 to 20 parts by weight with respect to 100 parts by weight of the carboxyl group-containing highly saturated nitrile rubber (a).

### Carboxyl Group-Containing Highly Saturated Nitrile Rubber (a)

The carboxyl group-containing highly saturated nitrile rubber (a) containing an α,β-ethylenically unsaturated nitrile monomer unit in a content of 5 to 60 wt% and having an iodine value of 120 or less which is used in the present invention (below, sometimes simply referred to as the "carboxyl group-containing highly saturated nitrile rubber (a)") is a rubber which is obtained by copolymerizing an α,β-ethylenically unsaturated nitrile monomer, carboxyl group-containing monomer, and a copolymerizable other monomer which is added according to need and which has an iodine value of 120 or less.

The α,β-ethylenically unsaturated nitrile monomer is not particularly limited so long as the α,β-ethylenically unsaturated nitrile monomer is an α,β-ethylenically unsaturated compound having a nitrile group. For example, acrylonitrile; α-halogenoacrylonitriles such as α-chloroacrylonitrile and α-bromoacrylonitrile; α-alkylacrylonitriles such as methacrylonitrile and ethacrylonitrile, etc. may be mentioned. Among these, acrylonitrile and methacrylonitrile are preferable, and acrylonitrile is particularly preferable. The α,β-ethylenically unsaturated nitrile monomers may be used as single types alone or as a plurality of types combined.

The content of the α,β-ethylenically unsaturated nitrile monomer unit is 5 to 60 wt%, preferably 10 to 50 wt%, more preferably 15 to 50 wt%, in all the monomer units. When the content of the α,β-ethylenically unsaturated nitrile monomer unit (a) is too small, the oil resistance of the obtained cross-linked rubber decreases. On the other hand, when the content of the α,β-ethylenically unsaturated nitrile monomer unit is too large, the cold resistance of the obtained cross-linked rubber decreases.

The carboxyl group-containing monomer is not particularly limited so long as the monomer concerned is a monomer being copolymerizable with the α,β-ethylenically unsaturated nitrile monomer and having one or more unsubstituted (free) carboxyl groups which is not esterified etc. By using a carboxyl group-containing monomer, carboxyl groups can be introduced into the nitrile rubber.

As the carboxyl group-containing monomer used in the present invention, an α,β-ethylenically unsaturated monocarboxylic acid monomer, an α,β-ethylenically unsaturated polyvalent carboxylic acid monomer, an α,β-ethylenically unsaturated dicarboxylic acid monoester monomer, etc. may be mentioned. The carboxyl group-containing monomers also include the monomers in which the carboxyl groups of these monomers form carboxylic acid salts. Moreover, the anhydride(s) of the α,β-ethylenically unsaturated polyvalent carboxylic acid forms a carboxyl group(s) by cleaving the acid anhydride group(s) after copolymerization, and hence can be used as a carboxyl group-containing monomer.

As the α,β-ethylenically unsaturated monocarboxylic acid monomer, acrylic acid, methacrylic acid, ethylacrylic acid, crotonic acid, cinnamic acid, etc. may be mentioned.

As the α,β-ethylenically unsaturated polyvalent carboxylic acid monomer, butenedioic acids such as fumaric acid and maleic acid; and itaconic acid, citraconic acid, mesaconic acid, glutaconic acid, allylmalonic acid, teraconic acid, etc. may be mentioned. As the anhydride of the α,β-unsaturated polyvalent carboxylic acid, maleic anhydride, itaconic anhydride, citraconic anhydride, etc. may be mentioned.

As the α,β-ethylenically unsaturated dicarboxylic acid monoester monomer, maleic acid monoalkyl ester such as monomethyl maleate, monoethyl maleate, monopropyl maleate, and mono-n-butyl maleate; maleic acid monocycloalkyl esters such as monocyclopentyl maleate, monocyclohexyl maleate, and monocycloheptyl maleic acid; maleic acid monoalkyl cycloalkyl esters such as monomethyl cyclopentyl maleate and monoethyl cyclohexyl maleate; fumaric acid monoalkyl esters such as monomethyl fumarate, monoethyl fumarate, monopropyl fumarate, and mono-n-butyl fumarate; fumaric acid monocycloalkyl esters such as monocyclopentyl fumarate, monocyclohexyl fumarate, and monocycloheptyl fumarate; fumaric acid monoalkyl cycloalkyl esters such as monomethyl cyclopentyl fumarate and monoethyl cyclohexyl fumarate; citraconic acid monoalkyl esters such as monomethyl citraconate, monoethyl citraconate, monopropyl citraconate, and mono-n-butyl citraconate; citraconic acid monocycloalkyl esters such as monocyclopentyl citraconate, monocyclohexyl citraconate, and monocycloheptyl citraconate; citraconic acid monoalkyl cycloalkyl esters such as monomethyl cyclopentyl citraconate and monoethyl cyclohexyl citraconate; itaconic acid monoalkyl esters such as monomethyl itaconate, monoethyl itaconate, monopropyl itaconate, and mono-n-butyl itaconate; itaconic acid monocycloalkyl esters such as monocyclopentyl itaconate, monocyclohexyl itaconate, and monocycloheptyl itaconate; itaconic acid monoalkyl cycloalkyl esters such as monomethyl cyclopentyl itaconate, and monoethyl cyclohexyl itaconate; etc. may be mentioned.

The carboxyl group-containing monomers may be used as single types alone or as a plurality of types combined. Among the carboxyl group-containing monomers, from the viewpoint of being able to make the effect of the present invention much more remarkable, the α,β-ethylenically unsaturated dicarboxylic acid monoester monomer is preferable, the α,β-ethylenically unsaturated dicarboxylic acid monoalkyl ester monomer is more preferable, the maleic acid monoalkyl ester is further preferable, and mono-n-butyl maleate is particularly preferable. Note that the number of carbon atoms of the alkyl group of the alkyl ester is preferably 2 to 8.

The content of the carboxyl group-containing monomer unit is preferably 0.1 to 30 wt%, more preferably 1 to 30 wt%, and still more preferably 1 to 20 wt%, furthermore preferably 1 to 15 wt%, in all the monomer units. By setting the content of the carboxyl group-containing monomer unit within the above-mentioned range, it is possible to make the mechanical properties and compression set resistance of the obtained cross-linked rubber better.

In addition, the carboxyl group-containing highly saturated nitrile rubber (a) used in the present invention preferably contains a conjugated diene monomer unit so that the obtained cross-linked rubber has rubber elasticity.

As the conjugated diene monomer forming the conjugated diene monomer unit, conjugated diene monomer having 4 to 6 carbon atoms such as 1,3-butadiene, isoprene, 2,3-dimethyl-1,3-butadiene, 1,3-pentadiene, and chloroprene is preferable, 1,3-butadiene and isoprene are more preferable, and 1,3-butadiene is particularly preferable. The conjugated diene monomers may be used as single types alone or as a plurality of types combined.

The content of the conjugated diene monomer unit (including hydrogenated parts) is preferably 10 to 80 wt%, more preferably 25 to 75 wt%, still more preferably 40 to 70 wt%, particularly preferably 50 to 70 wt%, in all the monomer units. By setting the content of the conjugated diene monomer unit within the above-mentioned range, it is possible to make the obtained cross-linked rubber excellent in the rubber elasticity while maintaining a good heat resistance and chemical stability.

The carboxyl group-containing highly saturated nitrile rubber (a) used in the present invention may also include, in addition to the α ,β-ethylenically unsaturated nitrile monomer unit, the carboxyl group-containing monomer unit, and the conjugated diene monomer unit, other monomer units copolymerizable with the monomers forming these. As such other monomers, an α,β-ethylenically unsaturated monocarboxylic acid ester monomer, ethylene, an α-olefin monomer, an aromatic vinyl monomer, a fluorine-containing vinyl monomer, a copolymerizable antiaging agent, etc. may be mentioned.

As the α,β-ethylenically unsaturated monocarboxylic acid ester monomer, (meth)acrylic acid esters (abbreviations for "methacrylic acid esters and acrylic acid esters," and the same shall apply hereinafter) each having an alkyl group having 1 to 18 carbon atoms such as methyl acrylate, ethyl acrylate, n-butyl acrylate, isobutyl acrylate, n-dodecyl acrylate, methyl methacrylate, and ethyl methacrylate; (meth)acrylic acid esters each having an alkoxyalkyl group having 2 to 18 carbon atoms such as methoxymethyl acrylate, methoxyethyl acrylate, ethoxypropyl acrylate, methoxybutyl acrylate, ethoxydodecyl acrylate, methoxyethyl methacrylate, methoxybutyl methacrylate, and ethoxypentyl methacrylate; (meth)acrylic acid esters each having a cyanoalkyl group having 2 to 12 carbon atoms such as α-cyanoethyl acrylate, α-cyanoethyl methacrylate, and cyanobutyl methacrylate; (meth)acrylic acid esters each having a hydroxyalkyl group having 1 to 12 carbon atoms such as 2-hydroxyethyl acrylate, 2-hydroxypropyl acrylate, and 2-hydroxyethyl methacrylate; and (meth)acrylic acid esters each having a fluoroalkyl group having 1 to 12 carbon atoms such as trifluoroethyl acrylate and tetrafluoropropyl methacrylate, etc. may be mentioned. Among these, the (meth)acrylic acid esters each having an alkoxyalkyl group having 2 to 18 carbon atoms are preferable, methoxyethyl acrylate and methoxyethyl methacrylate are more preferable, methoxyethyl acrylate is particularly preferable.

The α-olefin monomer preferably has 3 to 12 carbon atoms, and, for example, propylene, 1-butene, 4-methyl-1-pentene, 1-hexene, and 1-octene, etc. may be mentioned.

As the aromatic vinyl monomer, styrene, α-methylstyrene, vinylpyridine, etc. may be mentioned.

As the fluorine-containing vinyl monomer, fluoroethyl vinyl ether, fluoropropyl vinyl ether, o-trifluoromethylstyrene, vinyl pentafluorobenzoate, difluoroethylene, tetrafluoroethylene, etc. may be mentioned.

As the copolymerizable antiaging agent, N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, etc. may be mentioned.

These copolymerizable other monomers may be used as a plurality of types combined. The content of the copolymerizable other monomer unit(s) is preferably 50 wt% or less, more preferably 40 wt% or less, and still more preferably 10 wt% or less, in all the monomer units forming the carboxyl group-containing highly saturated nitrile rubber (a).

The iodine value in the carboxyl group-containing highly saturated nitrile rubber (a) is 120 or less, preferably 60 or less, more preferably 40 or less, and particularly preferably 30 or less. By setting the iodine value in the carboxyl group-containing highly saturated nitrile rubber (a) within the above-mentioned range, it is possible to make the heat resistance and the ozone resistance of the obtained cross-linked rubber better.

The polymer Mooney viscosity (ML₁₊₄, 100°C) of the carboxyl group-containing highly saturated nitrile rubber (a) is preferably 10 to 200, more preferably 15 to 150, still more preferably 15 to 100, and particularly preferably 30 to 70. By setting the polymer Mooney viscosity within the above-mentioned range, it is possible to make the processability excellent while good mechanical properties of the obtained cross-linked rubber are maintained.

Further, the content of carboxyl group in the carboxyl group-containing highly saturated nitrile rubber (a), that is, the number of moles of the carboxyl group per 100 g of the carboxyl group-containing highly saturated nitrile rubber (a) is preferably 5×10⁻⁴ to 5×10⁻¹ ephr, more preferably 1×10⁻³ to 1×10⁻¹ ephr, particularly preferably 5×10⁻³ to 6×10⁻² ephr. By setting the content of carboxyl group of the carboxyl group-containing nitrile rubber (a) within the above-mentioned range, it is possible to make the obtained cross-linked rubber higher in mechanical properties and compression set resistance while making the nitrile rubber composition good in scorch stability.

The method for producing the carboxyl group-containing highly saturated nitrile rubber (a) used in the present invention is not particularly limited, but it is possible to produce it by copolymerizing the above-mentioned monomers and, if necessary, hydrogenating the carbon-carbon double bonds in the obtained copolymer. The polymerization method is not particularly limited and a known emulsion polymerization method or solution polymerization method may be used, but the emulsion polymerization method is preferable from the viewpoint of the industrial productivity. At the time of the emulsion polymerization, in addition to the emulsifier, a polymerization initiator, and a molecular weight adjuster, polymerization auxiliary materials usually used can be used.

The emulsifier is not particularly limited, but, for example, nonionic emulsifiers such as polyoxyethylene alkyl ethers, polyoxyethylene alkyl phenol ethers, polyoxyethylene alkyl esters, and polyoxyethylene sorbitan alkyl esters; anionic emulsifiers such as salts of fatty acids such as myristic acid, palmitic acid, oleic acid, and linoleic acid, alkylbenzene sulfonic acid salts such as sodium dodecylbenzene sulfonate, higher alcohol sulfuric acid ester salts, and alkyl sulfosuccinic acid salts; and copolymerizable emulsifiers such as sulfo esters of α,β-unsaturated carboxylic acids, sulfate esters of α,β-unsaturated carboxylic acids, sulfoalkylaryl ethers, etc. may be mentioned. The amount of addition of the emulsifier is preferably 0.1 to 10 parts by weight and more preferably 0.5 to 5 parts by weight with respect to 100 parts by weight of the monomer used for the polymerization.

The polymerization initiator is not particularly limited so long as the polymerization initiator is a radical initiator. For example, inorganic peroxides such as potassium persulfate, sodium persulfate, ammonium persulfate, potassium perphosphate, and hydrogen peroxide; organic peroxides such as t-butyl peroxide, cumene hydroperoxide, p-menthane hydroperoxide, di-t-butyl peroxide, t-butylcumyl peroxide, acetyl peroxide, isobutyryl peroxide, octanoyl peroxide, dibenzoyl peroxide, 3,5,5-trimethylhexanoyl peroxide, and t-butylperoxyisobutyrate; azo compounds such as azobisisobutyronitrile, azobis-2,4-dimethylvaleronitrile, azobiscyclohexanecarbonitrile, and methyl azobisisobutyrate; etc. may be mentioned. These polymerization initiators can be used alone or as two or more types combined. As the polymerization initiator, an inorganic or organic peroxide is preferable. When a peroxide is used as a polymerization initiator, the peroxide can be used in combination with a reducing agent such as sodium bisulfite or ferrous sulfate as a redox-type polymerization initiator. The amount of addition of the polymerization initiator is preferably 0.01 to 2 parts by weight, with respect to 100 parts by weight of the monomers used for the polymerization.

For the medium of emulsion polymerization, usually water is used. The amount of the water is preferably 80 to 500 parts by weight, and more preferably 80 to 300 parts by weight, with respect to 100 parts by weight of the monomers used for the polymerization.

In the emulsion polymerization, it is possible to further use, if necessary, polymerization auxiliary materials such as a stabilizer, a dispersant, a pH adjuster, a deoxidizer, and a particle size adjuster. When these are used, the types and the amounts used thereof are not particularly limited.

Further, in the present invention, for the obtained copolymer, if necessary, the copolymer may be hydrogenated (hydrogenation reaction). The hydrogenation may be performed on the basis of a known method. An oil layer hydrogenation method in which the latex of the copolymer obtained by emulsion polymerization is coagulated, and then the hydrogenation is performed in the oil layer; and an aqueous layer hydrogenation method in which the latex of the obtained copolymer is hydrogenated as it is, etc. may be mentioned.

When the hydrogenation is performed by the oil layer hydrogenation method, preferably the latex of the copolymer prepared by the emulsion polymerization is coagulated by salting out or by using an alcohol, and the coagulated product is filtered out and dried, and then, dissolved in an organic solvent. Next, a hydrogenation reaction (the oil layer hydrogenation method) is performed, the obtained hydride is poured into a large amount of water to be coagulated, the coagulated product is filtered out and dried, and thus the carboxyl group-containing nitrile rubber (a) can be obtained.

For the coagulation of the latex by salting out, a known coagulant such as sodium chloride, calcium chloride, or aluminum sulfate can be used. Further, instead of the coagulation by salting out, the coagulation may also be performed by using an alcohol such as methanol. The solvent for the oil layer hydrogenation method is not particularly limited so long as the solvent is a liquid organic compound dissolving the copolymer obtained by emulsion polymerization; however, as such a solvent, preferably used are benzene, chlorobenzene, toluene, xylene, hexane, cyclohexane, tetrahydrofuran, methyl ethyl ketone, ethyl acetate, cyclohexanone and acetone.

As the catalyst of the oil layer hydrogenation method, any known selective hydrogenation catalyst can be used without particular limitation; a palladium-based catalyst and a rhodium-based catalyst are preferable, and a palladium-based catalyst (such as palladium acetate, palladium chloride and palladium hydroxide) are more preferable. These may be used as two or more types combined; however, in such a case, it is preferable to use a palladium-based catalyst as the main active component. These catalysts are usually used as carried on carriers. As the carrier, silica, silica-alumina, alumina, diatomaceous earth, activated carbon, etc. may be mentioned. The amount of use of the catalyst is preferably 10 to 5000 ppm by weight and more preferably 100 to 3000 ppm by weight with respect to the copolymer.

Alternatively, when the hydrogenation is performed by the aqueous layer hydrogenation method, the hydrogenation reaction is performed by adding water to and diluting, if necessary, the latex of the copolymer prepared by the emulsion polymerization. The aqueous layer hydrogenation method includes an aqueous layer direct hydrogenation method in which the latex is hydrogenated by supplying hydrogen to the reaction system in the presence of a hydrogenation catalyst, and an indirect aqueous layer hydrogenation method in which the latex is hydrogenated by reducing the latex in the presence of an oxidizing agent, a reducing agent and an activating agent. Of these two methods, the aqueous layer direct hydrogenation method is preferable.

In the aqueous layer direct hydrogenation method, the concentration of the copolymer in the aqueous layer (concentration in latex state) is preferably 40 wt% or less, in order to prevent the aggregation. The hydrogenation catalyst is not particularly limited so long as the catalyst is a compound being hardly decomposed by water. As specific examples, among palladium catalysts, as palladium salts of carboxylic acids such as formic acid, propionic acid, lauric acid, succinic acid, oleic acid, and phthalic acid; palladium chlorides such as palladium chloride, dichloro(cyclooctadiene)palladium, dichloro(norbornadiene)palladium, and ammonium hexachloropalladate (IV); iodides such as palladium iodide; palladium sulfate·dihydrate, etc. may be mentioned. Among these, the palladium salts of carboxylic acids, dichloro(norbornadiene)palladium, and ammonium hexachloropalladate (IV) are particularly preferable. The amount of use of the hydrogenation catalyst may be appropriately set; however, the amount of use of the hydrogenation catalyst is preferably 5 to 6000 ppm by weight and more preferably 10 to 4000 ppm by weight with respect to the copolymer obtained by polymerization.

In the aqueous layer direct hydrogenation method, after the completion of the hydrogenation reaction, the hydrogenation catalyst in the latex is removed. As the method for removing the hydrogenation catalyst, for example, it is possible to adopt a method in which an adsorbent such as activated carbon or an ion-exchange resin is added to the latex, the hydrogenation catalyst is adsorbed to the adsorbent under stirring, and then the latex is subjected to a filtration or centrifugation. It is also possible not to remove the hydrogenation catalyst so as remain in the latex.

Further, in the aqueous layer direct hydrogenation method, the thus obtained latex after the hydrogenation reaction is salted out to be coagulated, filtered and dried, and subjected to other operations, and thus, the carboxyl group-containing nitrile rubber (a) can be obtained. In this case, the steps of filtration and drying following the step of coagulation can be performed with known methods, respectively.

### Silica (b)

Further, the nitrile rubber composition of the present invention contains, in addition to the above-mentioned carboxyl group-containing highly saturated nitrile rubber (a), a silica (b) having a specific surface area of less than 60 m²/g (below, sometimes simply referred to as the " silica (b)"). In the present invention, by using the above-mentioned carboxyl group-containing highly saturated nitrile rubber (a) and a silica (b) having a specific surface area of less than 60 m²/g in combination, it is possible to suppress the dynamic heat generation low when made into a cross-linked rubber by cross-linking the rubber while maintaining good original state physical properties. Note that the above-mentioned specific surface area means an average value of a specific surface area of each particles. Accordingly, even if some particles among the particles forming a silica (b) have a specific surface area exceeding 60 m²/g, it is sufficient that an average value of a specific surface area of each particles forming a silica (b) is less than 60 m²/g.

The silica (b) used in the present invention is not particularly limited so long as the one having a specific surface area of less than 60 m²/g, for example, natural silica such as quartz powder and silicastone powder; synthetic silica such as silicic anhydride (silica gel, Aerosil, etc.), and hydrous silicic acid; etc. may be mentioned. Among these, synthetic silica is preferable from the viewpoint that it is possible to suppress the dynamic heat generation lower.

The specific surface area of the silica (b) used in the present invention is less than 60 m²/g. Further, the lower limit of the specific surface area of the silica (b) used in the present invention is not particularly limited, preferably 20 m²/g or more, more preferably 25 m²/g or more, still more preferably 30 m²/g or more. If the specific surface area is too great, a lowering effect in the dynamic heat generation cannot be obtained, due to this, the dynamic heat generation of the obtained cross-linked rubber is to be larger.

Note that the specific surface area of the silica (b) can be measured, for example, by the BET method based on ASTM D3037-81.

Further, as a specific example of the silica (b), trade name "Nipsil EL" (BET specific surface area: 48 m²/g, made by Tosoh Silica Corporation), trade name "Nipsil E-74P" (BET specific surface area: 45 m²/g, made by Tosoh Silica Corporation), trade name "Hi-Sil 532EP" (BET specific surface area: 55 m²/g, made by PPG Industries, Inc.), may be mentioned.

The content of the silica (b) in the nitrile rubber composition of the present invention is preferably 10 to 100 parts by weight, more preferably 20 to 90 parts by weight, and still more preferably 30 to 80 parts by weight, with respect to 100 parts by weight of the carboxyl group-containing highly saturated nitrile rubber (a). By setting the content of the silica (b) within the above-mentioned range, it is possible to more enhance an effect obtained by adding the silica (b), that is, an effect where the dynamic heat generation of the obtained cross-linked rubber can be suppressed while maintaining good original state physical properties.

### Polyamine-based Cross-linking Agent (c)

The nitrile rubber composition of the present invention contains a polyamine-based cross-linking agent (c), in addition to the above-mentioned carboxyl group-containing highly saturated nitrile rubber (a) and the silica (b). By using a polyamine-based cross-linking agent (c) as a cross-linking agent, it is possible to suitably improve the compression set resistance of the obtained cross-linked rubber.

The polyamine-based cross-linking agent (c) is not particularly limited so long as the polyamine-based cross-linking agent is a compound having two or more amino groups or a compound becoming a form having two or more amino groups at the time of cross-linking, but however, the polyamine-based cross-linking agent is preferably a compound comprised of an aliphatic hydrocarbon or an aromatic hydrocarbon in which a plurality of hydrogen atoms are substituted with amino groups or hydrazide structures (structures each represented by -CONHNH₂, where CO represents a carbonyl group) and a compound becoming the form of the aforementioned compound at the time of cross-linking.

As specific examples of the polyamine-based cross-linking agent (c), aliphatic polyvalent amines such as hexamethylenediamine, hexamethylenediamine carbamate, N,N-dicinnamylidene-1,6-hexanediamine, tetramethylenepentamine, and hexamethylenediamine cinnamaldehyde adduct; aromatic polyvalent amines such as 4,4-methylenedianiline, m-phenylenediamine, 4,4-diaminodiphenyl ether, 3,4-diaminodiphenyl ether, 4,4-(m-phenylenediisopropylidene)dianiline, 4,4-(p-phenylenediisopropylidene)dianiline, 2,2-bis[4-(4-aminophenoxy)phenyl]propane, 4,4-diaminobenzanilide, 4,4-bis(4-aminophenoxy)biphenyl, m-xylylenediamine, p-xylylenediamine, and 1,3,5-benzenetriamine; and polyvalent hydrazides such as isophthalic acid dihydrazide, terephthalic acid dihydrazide, phthalic acid dihydrazide, 2,6-naphthalene dicarboxylic acid dihydrazide, naphthalenic acid dihydrazide, oxalic acid dihydrazide, malonic acid dihydrazide, succinic acid dihydrazide, glutamic acid dihydrazide, adipic acid dihydrazide, pimelic acid dihydrazide, suberic acid dihydrazide, azelaic acid dihydrazide, sebacic acid dihydrazide, brassylic acid dihydrazide, dodecanedioic acid dihydrazide, acetone dicarboxylic acid dihydrazide, fumaric acid dihydrazide, maleic acid dihydrazide, itaconic acid dihydrazide, trimellitic acid dihydrazide, 1,3,5-benzene tricarboxylic acid dihydrazide, aconitic acid dihydrazide, and pyromellitic acid dihydrazide; etc. may be mentioned. Among these, from the viewpoint of being capable of making the effects of the present invention more remarkable, aliphatic polyvalent amines and the aromatic polyvalent amines are preferable, hexamethylenediamine carbamate and 2,2-bis[4-(4-aminophenoxy)phenyl]propane are more preferable, and hexamethylenediamine carbamate is particularly preferable.

The content of the cross-linking agent (c) in the nitrile rubber composition of the present invention is not particularly limited, but is preferably 0.1 to 20 parts by weight, more preferably 0.2 to 15 parts by weight, still more preferably 0.5 to 10 parts by weight, with respect to 100 parts by weight of the carboxyl group-containing highly saturated nitrile rubber (a). By setting the content of the polyamine-based cross-linking agent (c) within the above-mentioned range, a cross-linking when made into a cross-linked rubber can be sufficient, due to this, the mechanical properties of the obtained cross-linked rubber can be improved more.

### Silane Coupling Agent (d)

The nitrile rubber composition of the present invention preferably contains a silane coupling agent (d), in addition to the above-mentioned carboxyl group-containing highly saturated nitrile rubber (a), the silica (b), and the polyamine-based cross-linking agent (c). By adding a silane coupling agent (d), the tensile strength of the obtained cross-linked rubber can be improved more when made into a cross-linked rubber.

The silane coupling agent (d) is not particularly limited, but as specific examples thereof, sulfur-containing silane coupling agents such as γ-mercaptopropyltrimethoxysilane, γ-mercaptomethyltrimethoxysilane, γ -mercaptomethyltriethoxysilane, γ-mercaptohexamethyldisilazane, bis(3-triethoxysilylpropyl)tetrasulfane, and bis(3-triethoxysilylpropyl)disulfane; epoxy group-containing silane coupling agents such as γ-glycidoxypropyltrimethoxysilane, γ-glycidoxypropylmethyldimethoxysilane, β-(3,4-epoxycyclohexyl)ethyltrimethoxysilane, and γ-glycidoxypropylmethyldiethoxysilane; amino group-containing silane coupling agents such as N-(β-aminoethyl)-γ-aminopropyltrimethoxysilane, γ-aminopropyltrimethoxysilane, γ-aminopropyltriethoxysilane, N-2-(aminoethyl)-3-aminopropyltrimethoxysilane, N-2-(aminoethyl)-3-aminopropyltriethoxysilane, 3-triethoxysilyl-N-(1,3-dimethylbutylidene)propylamine, and N-phenyl-3-aminopropyltrimethoxysilane; (meth)acryloxy group-containing silane coupling agents such as γ-methacryloxypropyltrimethoxysilane, γ-methacryloxypropyltris(β-methoxyethoxy)silane, γ-methacryloxypropylmethyldimethoxysilane, γ-methacryloxypropylmethyldiethoxysilane, γ-methacryloxypropyltriethoxysilane, and γ-acryloxypropyltrimethoxysilane; vinyl group-containing silane coupling agents such as vinyltrimethoxysilane, vinyltriethoxysilane, vinyltris(β-methoxyethoxy)silane, vinyltrichlorosilane, and vinyltriacetoxysilane; chloropropyl group-containing silane coupling agents such as 3-chloropropyltrimethoxysilane; isocyanate group-containing silane coupling agents such as 3-isocyanatopropyltriethoxysilane; styryl group-containing silane coupling agents such as p-styryltrimethoxysilane; ureido group-containing silane coupling agents such as 3-ureidopropyltriethoxysilane; allyl group-containing silane coupling agents such as diallyldimethylsilane; alkoxy group-containing silane coupling agents such as tetraethoxysilane; phenyl group-containing silane coupling agents such as diphenyldimethoxysilane; fluoro group-containing silane coupling agents such as trifluoropropyltrimethoxysilane; alkyl group-containing silane coupling agents such as isobutyltrimethoxysilane and cyclohexylmethyldimethoxysilane; aluminum-based coupling agents such as acetoalkoxyaluminum diisopropylate; titanate-based coupling agents such as isopropyltriisostearoyl titanate, isopropyltris(dioctylpyrophosphate) titanate, isopropyltri(N-aminoethyl-aminoethyl) titanate, tetraoctylbis(ditridecylphosphite) titanate, tetra(2,2-diallyloxymethyl-1-butyl)bis(ditridecyl)phosphite titanate, bis(dioctylpyrophosphate)oxyacetate titanate, bis(dioctylpyrophosphate)ethylene titanate, tetraisopropylbis(dioctylphosphite) titanate, and isopropyltriisostearoyl titanate; etc. may be mentioned. Among these, from the view point that the addition effect is high, amino group-containing silane coupling agent and epoxy group-containing silane coupling agent are preferable, γ-aminopropyltrimethoxysilane and γ-glycidoxypropyltrimethoxysilane are more preferable. Note that when a silane coupling agent (d) is blended in, it may be used in the form of pre-surface treatment of the surface of the silica (b) with the silane coupling agent (d) or may be used in the form of blending in the silane coupling agent (d) separately independently without pre-surface treatment.

The content of the silane coupling agent (d) in the nitrile rubber composition of the present invention is preferably 0.1 to 5 parts by weight, more preferably 0.2 to 3 parts by weight, still more preferably 0.3 to 1.5 parts by weight, with respect to 100 parts by weight of the silica (b). By setting the content of the silane coupling agent (d) within the above-mentioned range, it is possible to suitably enhance an effect obtained by adding the silane coupling agent (d), that is, an effect of improving the original state physical properties of the obtained cross-linked rubber.

### Other Compounding Agents

The nitrile rubber composition of the present invention preferably further contains a basic cross-linking accelerator, in addition to the above-mentioned carboxyl group-containing highly saturated nitrile rubber (a), the silica (b), the polyamine-based cross-linking agent (c), the trimellitic acid-based plasticizer, and a silane coupling agent (d) which is blended in accordance with need from the viewpoint of being able to make the action and effect of the present invention more remarkable.

As specific examples of the basic cross-linking accelerator, a compound represented by the following general formula (1), a basic cross-linking accelerator having a cyclic amidine structure, a guanidine-based basic cross-linking accelerator, an aldehyde amine-based basic cross-linking accelerator, etc. may be mentioned.

R¹-NH-R² (1)

(In the general formula (1), R¹ and R² are each independently a substituted or unsubstituted alkyl group having 1 to 12 carbon atoms, or a substituted or unsubstituted cycloalkyl group having 5 to 12 carbon atoms.)

R¹ and R² are each a substituted or unsubstituted alkyl group having 1 to 12 carbon atoms, or a substituted or unsubstituted cycloalkyl group having 5 to 12 carbon atoms, but are each preferably a substituted or unsubstituted cycloalkyl group having 5 to 12 carbon atoms, and particularly preferably a substituted or unsubstituted cycloalkyl group having 5 to 8 carbon atoms.

Further, R¹ and R² each preferably have no substituent.

Note that, as specific examples of the substituent(s) in the case where R¹ and R² each have a substituent (s), a hydroxyl group, an alkoxy group, an alkoxycarbonyl group, an amino group, a halogen atom, etc. may be mentioned.

Further, among the compounds represented by the above general formula (1), from the viewpoint of being capable of more enhancing the processability and scorch stability, a compound represented by the following general formula (2) is more preferable.

R³-NH-R⁴ (2)

(In the general formula (2), R³ and R⁴ are each independently a substituted or unsubstituted cycloalkyl group having 5 to 8 carbon atoms.)

R³ and R⁴ are each a substituted or unsubstituted cycloalkyl group having 5 to 8 carbon atoms, but are each preferably a substituted or unsubstituted cycloalkyl group having 5 to 6 carbon atoms, and more preferably a substituted or unsubstituted cycloalkyl group having 6 carbon atoms.

Further, R³ and R⁴ each preferably have no substituent.

Note that as specific examples of the substituent(s) in the case where R³ and R⁴ each have a substituent (s), a hydroxyl group, an alkoxy group, an alkoxycarbonyl group, an amino group, a halogen atom, etc. may be mentioned.

As specific examples of the compound represented by the general formula (1), dicycloalkylamines such as dicyclopentylamine, dicyclohexylamine, and dicycloheptylamine; secondary amines each having an alkyl group and a cycloalkyl group bonded to the nitrogen atom such as N-methylcyclopentylamine, N-butylcyclopentylamine, N-heptylcyclopentylamine, N-octylcyclopentylamine, N-ethylcyclohexylamine, N-butylcyclohexylamine, N-heptylcyclohexylamine, and N-octylcyclooctylamine; secondary amines each having a hydroxyl group-containing alkyl group and a cycloalkyl group bonded to the nitrogen atom such as N-hydroxymethylcyclopentylamine and N-hydroxybutylcyclohexylamine; secondary amines each having an alkoxy group-containing alkyl group and a cycloalkyl group bonded to the nitrogen atom such as N-methoxyethylcyclopentylamine and N-ethoxybutylcyclohexylamine; secondary amines each having an alkoxycarbonyl group-containing alkyl group and a cycloalkyl group bonded to the nitrogen atom such as N-methoxycarbonylbutylcyclopentylamine and N-methoxycarbonylheptylcyclohexylamine; secondary amines each having an amino group-containing alkyl group and a cycloalkyl group bonded to the nitrogen atom such as N-aminopropylcyclopentylamine and N-aminoheptylcyclohexylamine; and secondary amines each having a halogen atom-containing cycloalkyl group bonded to the nitrogen atom such as di(2-chlorocyclopentyl)amine and di(3-chlorocyclopentyl)amine; etc. may be mentioned, but from the viewpoint of being capable of more enhancing the processability and the scorch stability, a dicycloalkylamine is preferable, dicyclopentylamine and dicyclohexylamine are more preferable, and dicyclohexylamine is particularly preferable.

As the basic cross-linking accelerator having a cyclic amidine structure, 1,8-diazabicyclo[5.4.0]undecene-7(hereinafter, sometimes abbreviated as "DBU"), 1,5-diazabicyclo[4.3.0]nonene-5 (hereinafter, sometimes abbreviated as "DBN"), 1-methylimidazole, 1-ethylimidazole, 1-phenylimidazole, 1-benzylimidazole, 1,2-dimethylimidazole, 1-ethyl-2-methylimidazole, 1-methoxyethylimidazole, 1-phenyl-2-methylimidazole, 1-benzyl-2-methylimidazole, 1-methyl-2-phenylimidazole, 1-methyl-2-benzylimidazole, 1,4-dimethylimidazole, 1,5-dimethylimidazole, 1,2,4-trimethylimidazole, 1,4-dimethyl-2-ethylimidazole, 1-methyl-2-methoxyimidazole, 1-methyl-2-ethoxyimidazole, 1-methyl-4-methoxyimidazole, 1-methyl-2-methoxyimidazole, 1-ethoxymethyl-2-methylimidazole, 1-methyl-4-nitroimidazole, 1,2-dimethyl-5-nitroimidazole, 1,2-dimethyl-5-aminoimidazole, l-methyl-4-(2-aminoethyl)imidazole, 1-methylbenzimidazole, 1-methyl-2-benzylbenzimidazole, 1-methyl-5-nitrobenzimidazole, 1-methylimidazoline, 1,2-dimethylimidazoline, 1,2,4-trimethylimidazoline, 1,4-dimethyl-2-ethylimidazoline, 1-methyl-phenylimidazoline, 1-methyl-2-benzylimidazoline, 1-methyl-2-ethoxyimidazoline, 1-methyl-2-heptylimidazoline, 1-methyl-2-undecylimidazoline, 1-methyl-2-heptadecylimidazoline, 1-methyl-2-ethoxymethylimidazoline, 1-ethoxymethyl-2-methylimidazoline, etc. may be mentioned. Among these basic cross-linking accelerators each having a cyclic amidine structure, 1,8-diazabicyclo[5.4.0]undecene-7 and 1,5-diazabicyclo[4.3.0]nonene-5 are preferable, and 1,8-diazabicyclo[5.4.0]undecene-7 is more preferable.

As the guanidine-based basic cross-linking accelerator, tetramethylguanidine, tetraethylguanidine, diphenylguanidine, 1,3-di-o-tolylguanidine, o-tolylbiguanide, etc. may be mentioned.

As the aldehyde amine-based basic cross-linking accelerator, n-butylaldehyde aniline, acetaldehyde ammonia, etc. may be mentioned.

Among these basic cross-linking accelerators, a compound represented by the general formula (1), a guanidine-based basic cross-linking accelerator, and a basic cross-linking accelerator having a cyclic amidine structure are preferable, and a compound represented by the general formula (1) and a basic cross-linking accelerator having a cyclic amidine structure are more preferable.

Note that the compound represented by the general formula (1) may be comprised of alcohols such as an alkylene glycol and an alkyl alcohol having 5 to 20 carbon atoms mixed together, and may further contain an inorganic acid and/or an organic acid. Further, as for the compound represented by the general formula (1), the compound represented by the general formula (1) may form a salt(s) with the inorganic acid and/or the organic acid, and further may form a complex with an alkylene glycol. Further, the basic cross-linking accelerator having the above cyclic amidine structure may form a salt with a carboxylic acid or an alkyl phosphoric acid, etc.

In the case where the basic cross-linking accelerator is mixed, the amount of the basic cross-linking accelerator in the nitrile rubber composition of the present invention is preferably 0.1 to 20 parts by weight, more preferably 0.2 to 15 parts by weight, and still more preferably 0.5 to 10 parts by weight, with respect to 100 parts by weight of the carboxyl group-containing highly saturated nitrile rubber (a).

Further, the nitrile rubber composition of the present invention includes a trimellitic acid-based plasticizer and may include, in addition to the above components, (additional) compounding agents usually used in the field of rubber such as a metal oxide such as zinc oxide or magnesium oxide, an α,β-ethylenically unsaturated carboxylic acid metal salt such as zinc methacrylate or zinc acrylate, a co-cross-linking agent, a cross-linking aid, a cross-linking retarder, an antiaging agent, an antioxidant, a light stabilizer, a scorch retarder such as a primary amine, an activating agent such as diethylene glycol, a plasticizer, a processing aid, a slip agent, an adhesive, a lubricant, a flame retardant, an antifungal agent, an acid acceptor, an antistatic agent, a pigment, and a foaming agent. The amounts of these compounding agents are not particularly limited and the compounding agents can be compounded in the amounts according to the compounding purposes so long as the compounding amounts are within ranges not impairing the object and the effects of the present invention.

The co-cross-linking agent is not particularly limited, but is preferably a low molecular weight or high molecular weight compound having a plurality of radically reactive unsaturated groups in the molecule. For example, polyfunctional vinyl compounds such as divinylbenzene and divinylnaphthalene; isocyanurates such as triallyl isocyanurate and trimethallyl isocyanurate; cyanurates such as triallylcyanurate; maleimides such as N,N'-m-phenylenedimaleimide; allyl esters of polyvalent acids such as diallyl phthalate, diallyl isophthalate, diallyl maleate, diallyl fumarate, diallyl sebacate, and triallyl phosphate; diethylene glycol bisallyl carbonate; allyl ethers such as ethylene glycol diallyl ether, triallyl ether of trimethylol propane, and partial allyl ether of pentaerythrit; allyl-modified resins such as allylated novolac resin and allylated resol resin; and 3 to 5-functional methacrylate compounds and acrylate compounds such as trimethylolpropane trimethacrylate and trimethylolpropane triacrylate; etc. may be mentioned. These may be used as single types or a plurality of types combined.

The plasticizer comprised in the nitrile rubber composition of the present invention is a trimellitic acid-based plasticizer. Further plasticizers such as a pyromellitic acid-based plasticizer, an ether ester-based plasticizer, a polyester-based plasticizer, a phthalic acid-based plasticizer, an adipic acid ester-based plasticizer, a phosphoric acid ester-based plasticizer, a sebacic acid ester-based plasticizer, an alkylsulfonic acid ester compound plasticizer, and an epoxidized vegetable oil-based plasticizer can be used. Specific examples of the trimellitic acid-based plasticizer are tri-2-ethylhexyl trimellitate, trimellitic acid isononyl ester, and trimellitic acid mixed linear alkyl ester. Examples of other plasticizers are dipentaerythritol ester, pyromellitic acid 2-ethylhexyl ester, polyether ester (molecular weight: approximately 300 to 5000), adipic acid bis[2-(2-butoxyethoxy)ethyl], dioctyl adipate, adipic acid-based polyester (molecular weight: approximately 300 to 5000), dioctyl phthalate, diisononyl phthalate, dibutyl phthalate, tricresyl phosphate, dibutyl sebacate, alkylsulfonic acid phenyl ester, epoxidized soybean oil, diheptanoate, di-2-ethyl hexanoate, didecanoate. These may be used as single types or a plurality of types combined.

Furthermore, the nitrile rubber composition of the present invention may contain rubber other than the above-mentioned carboxyl group-containing highly saturated nitrile rubber (a) in a range where the effects of the present invention are not obstructed. As such rubber other than the above-mentioned carboxyl group-containing highly saturated nitrile rubber (a), acrylic rubber, ethylene-acrylic acid copolymer rubber, fluororubber, styrene-butadiene copolymer rubber, polybutadiene rubber, ethylene-propylene copolymer rubber, ethylene-propylene-diene ternary copolymer rubber, epichlorohydrin rubber, urethane rubber, chloroprene rubber, silicone rubber, fluorosilicone rubber, chlorosulfonated polyethylene rubber, natural rubber, polyisoprene rubber, etc. may be mentioned. When mixing in rubber other than the carboxyl group-containing highly saturated nitrile rubber (a), the amount is preferably 30 parts by weight or less, more preferably 20 parts by weight or less, still more preferably 10 parts by weight or less with respect to 100 parts by weight of the carboxyl group-containing highly saturated nitrile rubber (a).

The nitrile rubber composition of the present invention is prepared by mixing the above-mentioned ingredients preferably in a nonaqueous system. The method for preparing the nitrile rubber composition of the present invention is not limited, but the nitrile rubber composition of the present invention can be usually prepared as follows: the ingredients other than the cross-linking agent and the ingredients unstable against heat are subjected to a primary kneading with a mixing machine such as a Banbury mixer, an internal mixer and a kneader; then the kneaded mixture is transferred to a roll or the like, and the cross-linking agent and the ingredients unstable against heat are added to the kneaded mixture, and then the resulting mixture is subjected to a secondary kneading to prepare the nitrile rubber composition.

### Cross-Linked Rubber

The cross-linked rubber of the present invention is obtained by cross-linking the above nitrile rubber composition of the present invention.

The cross-linked rubber of the present invention can be produced as follows: the nitrile rubber composition of the present invention is used, the composition is formed by using a forming machine corresponding to the desired shape, such as an extruder, an injection molding machine, a compressor, or a roll, the cross-linking reaction is performed by heating the formed product, and thus the shape of the formed product is fixed to produce the cross-linked rubber. In this case, the cross-linking may be performed after preliminarily performing the forming, or alternatively, the forming and the cross-linking may also be performed simultaneously. The forming temperature is usually 10 to 200°C, and preferably 25 to 120°C. The cross-linking temperature is usually 100 to 200°C and preferably 130 to 190°C, and the cross-linking time is usually 1 minute to 24 hours and preferably 2 minutes to 1 hour.

Further, depending on the shape, size, etc. of the cross-linked product, sometimes, even if the surface is cross-linked, the inside part is not sufficiently cross-linked, so it is possible to further heat the rubber for secondary cross-linking.

As the heating method, a general method which is used for cross-linking rubber such as press heating, steam heating, oven heating, and hot air heating may be suitably selected.

The thus obtained cross-linked rubber of the present invention is obtained by cross-linking the above nitrile rubber composition of the present invention, and is good in the original state physical properties and small in the dynamic heat generation.

Therefore, the cross-linked rubber of the present invention, taking advantage of such a characteristic, can be used for various seal members such as O-rings, packings, diaphragms, dumpers, oil seals, shaft seals, bearing seals, well head seals, shock absorber seals, air compressor seals, seals for sealing in Freon or fluorohydrocarbons or carbon dioxide which is used for compressors for cooling devices for air-conditioners or refrigerating machines of air-conditioning systems, seals for sealing in supercritical carbon dioxide or subcritical carbon dioxide which is used for the washing media in precision washing, seals for roller devices (roller bearings, automotive hub units, automotive water pumps, linear guide devices and ball screws, etc.), valves and valve seats, BOP (blow out preventer), and bladders; various types of gaskets such as intake manifold gaskets which are attached at connecting parts of intake manifolds and cylinder heads, cylinder head gaskets which are attached at connecting parts of cylinder blocks and cylinder heads, rocker cover gaskets which are attached at connecting parts of rocker covers and cylinder heads, oil pan gaskets which are attached at connecting parts of oil pans and cylinder blocks or transmission cases, fuel cell separator gaskets which are attached between pairs of housings straddling unit cells provided with positive electrodes, electrolyte plates, and negative electrodes, and top cover gaskets for hard disk drives; various types of rolls such as printing rolls, ironmaking rolls, papermaking rolls, industrial rolls, and office equipment rolls; various types of belts such as flat belts (film core flat belts, cord flat belts, laminated flat belts, single type flat belts, etc.), V-belts (wrapped V-belts, low edge V-belts, etc.), V-ribbed belts (single V-ribbed belts, double V-ribbed belts, wrapped V-ribbed belt, rubber-backed V-ribbed belts, top cog V-ribbed belts, etc.), CVT use belts, timing belts, toothed belts, and conveyor belts; various types of hoses such as fuel hoses, turbo air hoses, oil hoses, radiator hoses, heater hoses, water hoses, vacuum brake hoses, control hoses, air-conditioner hoses, brake hoses, power steering hoses, air hoses, marine hoses, risers, and flow lines; and various types of boots such as CVJ boots, propeller shaft boots, constant velocity joint boots, and rack and pinion boots; attenuating member rubber parts such as cushion materials, dynamic dampers, rubber couplings, air springs, shock absorbers, and clutch facing materials; dust covers, automotive interior members, friction materials, tires, covered cables, shoe soles, electromagnetic wave shields, binders for flexible printed circuit boards or other binders, fuel cell separators and also other broad applications in the electronics field. In particular, since the cross-linked rubber of the present invention is small in the dynamic heat generation, the cross-linked rubber of the present invention is suitably used as seal members used in vibrating portions, for example, as dumpers.

### EXAMPLES

Hereinafter, the present invention will be described specifically by way of Examples and Comparative Examples. Examples 6, 10 and 11 do not contain a trimellitic acid-based plasticizer and are thus reference examples. In what follows, unless otherwise specified, "parts" are based on weight. Note that the tests and the evaluations were carried out as follows.

### Content of Carboxyl Group

To 0.2 g of a 2-mm square piece of a carboxyl group-containing highly saturated nitrile rubber, 100 mL of 2-butanone was added. The mixture was stirred for 16 hours, and then 20 mL of ethanol and 10 mL of water were added to the mixture. While stirring, a titration was performed at room temperature by using a 0.02N hydrous ethanol solution of potassium hydroxide, and thymolphthalein as an indicator, and thus the content of the carboxyl group was determined as the number of moles of the carboxyl group in 100 g of rubber (units: ephr).

### Composition of Carboxyl Group-Containing Highly Saturated Nitrile Rubber

The contents of the respective monomer units constituting the carboxyl group-containing highly saturated nitrile rubber were measured by the following methods.

Specifically, the content of the mono-n-butyl maleate unit was calculated as follows: the number of moles of the carboxyl group with respect to 100 g of the carboxyl group-containing highly saturated nitrile rubber after hydrogenation was determined by the above-mentioned method for measuring "the content of the carboxyl group," and then the determined number of moles was converted into the content of the mono-n-butyl maleate unit.

The content of the 1,3-butadiene unit (including the hydrogenated fraction) was calculated by measuring the iodine value of the carboxyl group-containing nitrile rubber before the hydrogenation reaction by the following method.

The content of the acrylonitrile unit was calculated by measuring the nitrogen content in the carboxyl group-containing highly saturated nitrile rubber after hydrogenation by the Kjeldahl method in accordance with JIS K6384.

The content of the methoxyethyl acrylate unit was calculated as the balance of the above respective monomer units.

### Iodine Value

The iodine value of the carboxyl group-containing highly saturated nitrile rubber was measured in accordance with JIS K 6235.

### Mooney Viscosity

The Mooney viscosity (polymer Mooney) of the carboxyl group-containing highly saturated nitrile rubber was measured in accordance with JIS K6300 (units: [ML₁₊₄, 100°C]).

### Original State Physical Properties (Tensile Strength, Elongation at Break, Hardness)

The nitrile rubber composition was placed in a mold of 15 cm in length, 15 cm in width and 0.2 cm in depth, and was press-formed at 170°C for 20 minutes while being pressurized at a press pressure of 10 MPa. Thus, a sheet-shaped primary cross-linked product was obtained. Then, the obtained primary cross-linked product was transferred to a gear oven and subjected to a secondary cross-linking at 170°C for 4 hours. The obtained sheet-like cross-linked rubber was punched with a No. 3 type dumbbell to prepare a test piece. By using the obtained test piece, the tensile strength and the elongation at break of the cross-linked rubber were measured in accordance with JIS K6251, and the hardness of the cross-linked rubber was measured in accordance with JIS K6253 by using a durometer hardness tester (type A).

### Heat Generation Test

The heat generation property was evaluated by using a flexometer test specified in ASTM D 623-78. Specifically, first, the nitrile rubber composition was placed in a cylindrical mold of 17.8 ± 0.15 mm in diameter and 25 ± 0.25 mm in depth, subjected to a cross-linking at 170°C for 20 minutes, and then subjected to a secondary cross-linking at 170°C for 4 hours. Thus, a test piece for flexometer test was obtained. Then, by using a flexometer (GABO Meter 4000, manufactured by GABO GmbH), a heat generation test was performed by applying a dynamic displacement for 25 minutes under the conditions of a test temperature of 100°C, an initial load of 1 MPa, and a dynamic displacement of 4.45 mm. In this case, the measurement frequency was set at 30 Hz. From the result of the heat generation test, the internal HBU (internal heat generation amount: the difference between the measured temperature inside the test piece and the atmosphere temperature 100°C was taken as the heat generation temperature) was measured. The smaller the internal HBU, the smaller the dynamic heat generation and the better the dynamic heat generation.

### Production Example 1 (Production of Carboxyl Group-Containing Highly Saturated Nitrile Rubber (a1))

In a reactor, 220 parts of ion exchanged water, 5 parts of an aqueous solution of sodium dodecylbenzenesulfonate having a concentration of 10 wt%, 37 parts of acrylonitrile, 4 parts of mono-n-butyl maleate, and 0.75 part of t-dodecyl mercaptan (molecular weight adjuster) were placed in the mentioned order, the gas inside the reactor was replaced with nitrogen three times, and then 57 parts of 1,3-butadiene was placed in the reactor. Then, the reactor was held at 10°C, 0.06 part of cumene hydroperoxide (polymerization initiator), and suitable amounts of a reducing agent and a chelating agent were placed in the reactor, and the polymerization reaction was continued while the reaction mixture was being stirred; at the times when the polymerization conversion rate reached 40% and 60%, 1 part of mono-n-butyl maleate was added; at the time when the polymerization conversion rate reached 85%, 0.1 part of an aqueous solution of hydroquinone (polymerization terminator) having a concentration of 10 wt% was added to terminate the polymerization reaction. Next, the residual monomers were removed at a water temperature of 60°C, to obtain a latex (solid content concentration: 30 wt%) of a nitrile rubber.

Then, in an autoclave, the latex of the nitrile rubber and a palladium catalyst (a solution prepared by mixing a 1 wt% palladium acetate acetone solution and an equal weight of ion exchanged water) were added in such a way that the content of palladium was 1,000 ppm by weight with respect to the dry weight of the rubber contained in the latex of the nitrile rubber obtained as described above; then, a hydrogenation reaction was performed at a hydrogen pressure of 3 MPa and a temperature of 50°C for 6 hours to obtain a latex of a carboxyl group-containing highly saturated nitrile rubber (a1).

To the obtained latex of the carboxyl group-containing highly saturated nitrile rubber (a1), two times volume of methanol was added to coagulate the latex, then the resulting mixture was filtered and the solid product (crumb) was taken out, the solid product was vacuum dried at 60°C for 12 hours to thereby obtain the carboxyl group-containing highly saturated nitrile rubber (a1). The obtained carboxyl group-containing highly saturated nitrile rubber (a1) had a carboxyl group content of 0.030 ephr, an iodine value of 9, and a polymer Moony viscosity [ML₁₊₄, 100°C] of 44. The obtained carboxyl group-containing highly saturated nitrile rubber (a1) included 35.7 wt% of the acrylonitrile unit, 58.6 wt% of the butadiene unit (including the saturated fraction), and 5.7 wt% of the mono-n-butyl maleate unit.

### Production Example 2 (Production of Carboxyl Group-Containing Highly Saturated Nitrile Rubber (a2))

In a reactor, 180 parts of ion exchanged water, 25 parts of an aqueous solution of sodium dodecylbenzenesulfonate having a concentration of 10 wt%, 23 parts of acrylonitrile, 6.5 parts of mono-n-butyl maleate, 30.5 parts of methoxyethyl acrylate, and 0.65 part of t-dodecyl mercaptan (molecular weight adjuster) were placed in the mentioned order, the gas inside the reactor was replaced with nitrogen three times, and then 40 parts of 1,3-butadiene was placed in the reactor. Then, the reactor was held at 10°C, 0.06 part of cumene hydroperoxide (polymerization initiator), and suitable amounts of a reducing agent and a chelating agent were placed in the reactor, and the polymerization reaction was continued while the reaction mixture was being stirred; at the time when the polymerization conversion rate reached 83%, 0.1 part of an aqueous solution of hydroquinone (polymerization terminator) having a concentration of 10 wt% was added to terminate the polymerization reaction. Next, the residual monomers were removed at a water temperature of 60°C, to obtain a latex (solid content concentration: 30 wt%) of a nitrile rubber.

Then, in an autoclave, the latex of the nitrile rubber and a palladium catalyst (a solution prepared by mixing a 1 wt% palladium acetate acetone solution and an equal weight of ion exchanged water) were added in such a way that the content of palladium was 1,000 ppm by weight with respect to the dry weight of the rubber contained in the latex of the nitrile rubber obtained as described above; then, a hydrogenation reaction was performed at a hydrogen pressure of 3 MPa and a temperature of 50°C for 6 hours to obtain a latex of a carboxyl group-containing highly saturated nitrile rubber (a2).

To the obtained latex of the carboxyl group-containing highly saturated nitrile rubber (a2), two times volume of methanol was added to coagulate the latex, then the resulting mixture was filtered and the solid product (crumb) was taken out, and the solid product was vacuum dried at 60°C for 12 hours to thereby obtain the carboxyl group-containing highly saturated nitrile rubber (a2). The obtained carboxyl group-containing highly saturated nitrile rubber (a2) had a carboxyl group content of 0.034 ephr, an iodine value of 9, and a polymer Moony viscosity [ML₁₊₄, 100°C] of 41. The obtained carboxyl group-containing highly saturated nitrile rubber (a2) included 24 wt% of the acrylonitrile unit, 46.6 wt% of the butadiene unit (including the saturated fraction), 6.5 wt% of the mono-n-butyl maleate unit, and 22.9 wt% of the methoxyethyl acrylate unit.

### Production Example 3 (Production of Carboxyl Group-Containing Highly Saturated Nitrile Rubber (a3))

In a reactor, 180 parts of ion exchanged water, 25 parts of an aqueous solution of sodium dodecylbenzenesulfonate having a concentration of 10 wt%, 20.4 parts of acrylonitrile, 5 parts of mono-n-butyl maleate, 35.2 parts of n-butyl acrylate, 0.35 part of t-dodecyl mercaptan (second alkylthiol compound), and 0.03 part of 2,2,4,6,6-pentamethyl-4-heptanethiol (first alkylthiol compound) were placed in the mentioned order, the gas inside the reactor was replaced with nitrogen three times, and then 39.4 parts of 1,3-butadiene was placed in the reactor. Next, the reactor was held at 10°C, 0.1 part of cumene hydroperoxide (polymerization initiator), and suitable amounts of a reducing agent and a chelating agent were placed in the reactor, and the polymerization reaction was continued while the reaction mixture was being stirred. Then, at the time when the polymerization conversion rate reached 90%, 0.1 part of an aqueous solution of hydroquinone (polymerization terminator) having a concentration of 10 wt% was added to terminate the polymerization reaction. Next, the residual monomers were removed by using a rotary evaporator at a water temperature of 60°C, to obtain a latex (solid content concentration: approximately 30 wt%) of a nitrile rubber.

Then, in an autoclave, the latex of the nitrile rubber and a palladium catalyst (a solution prepared by mixing a 1 wt% palladium acetate acetone solution and an equal weight of ion exchanged water) were added in such a way that the content of palladium was 2,000 ppm by weight with respect to the dry weight of the rubber contained in the latex of the nitrile rubber obtained as described above; then, a hydrogenation reaction was performed at a hydrogen pressure of 3 MPa and a temperature of 50°C for 6 hours to obtain a latex of a carboxyl group-containing highly saturated nitrile rubber (a3).

Then, to the obtained latex of the carboxyl group-containing highly saturated nitrile rubber (a3), two times volume of methanol was added to coagulate the latex, then the resulting mixture was filtered and the solid product (crumb) was taken out, and the solid product was vacuum dried at 60°C for 12 hours to thereby obtain the carboxyl group-containing highly saturated nitrile rubber (a3). The obtained carboxyl group-containing highly saturated nitrile rubber (a3) had a composition consisting of 20.8 wt% of the acrylonitrile unit, 44.2 wt% of the butadiene unit (including the saturated fraction), 4.5 wt% of the mono-n-butyl maleate unit, and 30.5 wt% of the n-butyl acrylate unit, and an iodine value of 10.

### Production Example 4 (Synthesis of Highly Saturated Nitrile Rubber (a'4))

In a reactor, 0.2 part of sodium carbonate was dissolved in 200 parts of ion exchanged water, and to the resulting solution, 2.25 parts of a fatty acid potassium soap (a potassium salt of a fatty acid) was added to prepare a soap aqueous solution. Then, in the soap aqueous solution, 37 parts of acrylonitrile and 0.47 part of t-dodecyl mercaptan (molecular weight adjuster) were placed in the mentioned order, the gas inside the reactor was replaced with nitrogen three times, and then 63 parts of 1,3-butadiene was placed in the reactor. Next, the reactor was held at 5°C, 0.1 part of cumene hydroperoxide (polymerization initiator), and suitable amounts of a reducing agent and a chelating agent were placed in the reactor, and the polymerization reaction was performed for 16 hours while the temperature was being held at 5°C. Then, 0.1 part of an aqueous solution of hydroquinone (polymerization terminator) having a concentration of 10 wt% was added to terminate the polymerization reaction, and the residual monomers were removed by using a rotary evaporator at a water temperature of 60°C, to obtain a latex (solid content concentration: approximately 25 wt%) of a nitrile rubber.

Next, the latex obtained as described above was added to an aqueous solution of aluminum sulfate in an amount of 3 wt% with respect to the dry weight of the rubber contained in the latex, the resulting mixture was stirred to coagulate the latex, the coagulated latex was filtered off while being washed with water, and then the filtered coagulated latex was vacuum dried at 60°C for 12 hours, to obtain a nitrile rubber. Then, the obtained nitrile rubber was dissolved in acetone so as for the concentration to be 12 wt%, the resulting solution was placed in an autoclave, a palladium-silica catalyst was added to the solution in an amount of 200 ppm by weight with respect to the nitrile rubber, and the hydrogenation reaction was performed at a hydrogen pressure of 3 MPa. After the completion of the hydrogenation reaction, the reaction mixture was poured into a large amount of water to coagulate the reaction product, and the reaction product was filtered off and dried, to obtain a highly saturated nitrile rubber (a'4). The obtained highly saturated nitrile rubber (a'4) had a composition consisting of 36.2 wt% of the acrylonitrile unit and 63.8 wt% of the butadiene unit (including the saturated fraction), and an iodine value of 28. The content of the carboxyl group in the highly saturated nitrile rubber (a'4) was measured according to the above-described method and was found to be equal to or smaller than the detection limit; in other words, the highly saturated nitrile rubber (a'4) substantially did not contain any carboxyl group.

### Example 1

By using a Banbury mixer, the following ingredients were added to and mixed at 50°C for 5 minutes with 100 parts of the carboxyl group-containing highly saturated nitrile rubber (a1) obtained in Production Example 1: 50 parts of silica (b1) (trade name "Nipsil EL", BET specific surface area: 48 m²/g, made by Tosoh Silica Corporation), 5 parts of tri-2-ethylhexyl trimellitate (trade name "Adekacizer C-8," made by ADEKA Corporation, plasticizer), 1.5 parts of 4,4'-di-(α,α-dimethylbenzyl)diphenylamine (trade name "Nocrac CD", made by Ouchi Shinko Chemical Industrial Co., Ltd., antiaging agent), 1 part of stearic acid, and 1 part of a polyoxyethylene alkyl ether phosphoric acid ester (trade name "Phosphanol RL210", made by Toho Chemical Industry Co., Ltd., processing aid). Next, the obtained mixture was transferred to a roll at 50°C, 4 parts of 1,8-diazabicyclo[5.4.0]-undecene-7 (DBU) (trade name "RHENOGRAN XLA-60 (GE2014)", made by Rhein Chemie Corporation; a product composed of 60% of DBU (including a fraction being zinc dialkyldiphosphate salt), a basic cross-linking accelerator), and 2.4 parts of hexamethylenediamine carbamate (trade name "Diak#1", made by Du Pont Dow Elastomer Corporation, polyamine-based cross-linking agent belonging to aliphatic polyvalent amines) were added to the mixture, and the mixture was kneaded to obtain a nitrile rubber composition.

A cross-linked rubber was obtained by using the above-mentioned method and by using the above prepared nitrile rubber composition, and the obtained cross-linked rubber was subjected to the measurements of the original state physical properties (tensile strength, elongation at break, hardness), and the heat generation test (internal HBU). The results thus obtained are shown in Table 1.

### Example 2

A nitrile rubber composition and a cross-linked rubber were prepared in the same manner as in Example 1 except that 1 part of 3-aminopropyltriethoxysilane (trade name "Z-6011 SILANE"n made by Dow Corning Toray Co., Ltd., silane coupling agent) was mixed, and the evaluations were performed in the same manner as in Example 1. The timing of the addition of 3-aminopropyltriethoxysilane was set at a time after the addition of the silica (b1). The results thus obtained are shown in Table 1.

### Example 3

A nitrile rubber composition and a cross-linked rubber were prepared in the same manner as in Example 1 except that the silica species was altered from the silica (b1) to the silica (b2) (trade name "Nipsil E-74P", BET specific surface area: 45 m²/g, made by Tosoh Silica Corporation), and the evaluations were performed in the same manner as in Example 1. The results thus obtained are shown in Table 1.

### Example 4

A nitrile rubber composition and a cross-linked rubber were prepared in the same manner as in Example 2 except that the silica species was altered from the silica (b1) to the silica (b2) (trade name "Nipsil E-74P", BET specific surface area: 45 m²/g, made by Tosoh Silica Corporation), and the evaluations were performed in the same manner as in Example 1. The results thus obtained are shown in Table 1.

### Example 5

A nitrile rubber composition and a cross-linked rubber were prepared in the same manner as in Example 2 except that 100 parts of the carboxyl group-containing highly saturated nitrile rubber (a2) obtained in Production Example 2 was used in place of 100 parts of the carboxyl group-containing highly saturated nitrile rubber (a1) obtained in Production Example 1, the amount of the silica (b1) was altered from 50 parts to 55 parts, and the amount of hexamethylenediamine carbamate was altered from 2.4 parts to 2.7 parts, and the evaluations were performed in the same manner as in Example 1. The results thus obtained are shown in Table 1.

### Example 6

A nitrile rubber composition and a cross-linked rubber were prepared in the same manner as in Example 2 except that 100 parts of the carboxyl group-containing highly saturated nitrile rubber (a3) obtained in Production Example 3 was used in place of 100 parts of the carboxyl group-containing highly saturated nitrile rubber (a1) obtained in Production Example 1, the amount of the silica (b1) was altered from 50 parts to 60 parts, 5 parts of polyether ester (trade name "Adekacizer RS-700," made by ADEKA Corporation, plasticizer) was used in place of 5 parts of tri-2-ethylhexyl trimellitate, and the amount of hexamethylenediamine carbamate was altered from 2.4 parts to 1.9 parts, and the evaluations were performed in the same manner as in Example 1. The results thus obtained are shown in Table 1.

### Example 7

A nitrile rubber composition and a cross-linked rubber were prepared in the same manner as in Example 1 except that the silica species was altered from the silica (b1) to the silica (b3) (trade name "Hi-Sil 532EP", BET specific surface area: 55 m²/g, made by PPG Industries, Inc.), and the evaluations were performed in the same manner as in Example 1. The results thus obtained are shown in Table 1.

### Example 8

A nitrile rubber composition and a cross-linked rubber were prepared in the same manner as in Example 7 except that 1 part of 3-aminopropyltriethoxysilane was mixed, and the evaluations were performed in the same manner as in Example 1. The timing of the addition of 3-aminopropyltriethoxysilane was set at the same time as the addition of the silica (b3). The results thus obtained are shown in Table 1.

### Example 9

A nitrile rubber composition and a cross-linked rubber were prepared in the same manner as in Example 7 except that 100 parts of the carboxyl group-containing highly saturated nitrile rubber (a2) obtained in Production Example 2 was used in place of 100 parts of the carboxyl group-containing highly saturated nitrile rubber (a1) obtained in Production Example 1, the amount of the silica (b3) was altered from 50 parts to 55 parts, and the amount of hexamethylenediamine carbamate was altered from 2.4 parts to 2.7 parts, and the evaluations were performed in the same manner as in Example 1. The results thus obtained are shown in Table 1.

### Example 10

A nitrile rubber composition and a cross-linked rubber were prepared in the same manner as in Example 9 except that 5 parts of polyether ester was used in place of 5 parts of tri-2-ethylhexyl trimellitate, and 1 part of 3-aminopropyltriethoxysilane was mixed, and the evaluations were performed in the same manner as in Example 1. The timing of the addition of 3-aminopropyltriethoxysilane was set at the same time as the addition of the silica (b3). The results thus obtained are shown in Table 1.

### Example 11

A nitrile rubber composition and a cross-linked rubber were prepared in the same manner as in Example 7 except that 100 parts of the carboxyl group-containing highly saturated nitrile rubber (a3) obtained in Production Example 3 was used in place of 100 parts of the carboxyl group-containing highly saturated nitrile rubber (a1) obtained in Production Example 1, the amount of the silica (b3) was altered from 50 parts to 60 parts, 5 parts of polyether ester was used in place of 5 parts of tri-2-ethylhexyl trimellitate, and the amount of hexamethylenediamine carbamate was altered from 2.4 parts to 1.9 parts, and the evaluations were performed in the same manner as in Example 1. The results thus obtained are shown in Table 1.

### Example 12

A nitrile rubber composition and a cross-linked rubber were prepared in the same manner as in Example 11 except that 5 parts of tri-2-ethylhexyl trimellitate was used in place of 5 parts of polyether ester, and 1 part of 3-aminopropyltriethoxysilane was mixed, and the evaluations were performed in the same manner as in Example 1. The timing of the addition of 3-aminopropyltriethoxysilane was set at the same time as the addition of the silica (b3). The results thus obtained are shown in Table 1.

### Example 13

A nitrile rubber composition and a cross-linked rubber were prepared in the same manner as in Example 12 except that 1 part of 3-glycidoxypropyltrimethoxysilane (trade name "Z-6040 SILANE", made by Dow Corning Toray Co., Ltd., silane coupling agent) was used in place of 1 part of 3-aminopropyltriethoxysilane, and the evaluations were performed in the same manner as in Example 1. The results thus obtained are shown in Table 1.

### [Table 1]

**Table 1**

| | | | Examples | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Composition of nitrile rubber composition | | | | | | | | | | | | | | | |
| | Carboxyl group-containing highly saturated nitrile rubber (a1) | (parts) | 100 | 100 | 100 | 100 | | | 100 | 100 | | | | | |
| | Carboxyl group-containing highly saturated nitrile rubber (a2) | (parts) | | | | | 100 | | | | 100 | 100 | | | |
| | Carboxyl group-containing highly saturated nitrile rubber (a3) | (parts) | | | | | | 100 | | | | | 100 | 100 | 100 |
| | Highly saturated nitrile rubber (a'4) | (parts) | | | | | | | | | | | | | |
| | Silica (b1) "Nipsil EL (specific surface area: 48 m²/g)" | (parts) | 50 | 50 | | | 55 | 60 | | | | | | | |
| | Silica (b2) "Nipsil E-74P (specific surface area: 45 m²/g)" | (parts) | | | 50 | 50 | | | | | | | | | |
| | Silica (b3) "Hi-Sil 532EP (specific surface area: 55 m²/g)" | (parts) | | | | | | | 50 | 50 | 55 | 55 | 60 | 60 | 60 |
| | Silica (b'4) "Nipsil ER (specific surface area: 111m²/g)" | (parts) | | | | | | | | | | | | | |
| | Silica (b'5) "Carplex CS-7" (specific surface area: 109 m²/g)" | (parts) | | | | | | | | | | | | | |
| | Silica (b'6) "AEROSIL(R) R972V (specific surface area: 110 m ²/g)" | (parts) | | | | | | | | | | | | | |
| | Silica (b'7) "ULTRASIL VN2 (specific surface area: 130 m ²/g)" | (parts) | | | | | | | | | | | | | |
| | Tri-2-ethylhexyl trimellitate | (parts) | 5 | 5 | 5 | 5 | 5 | | 5 | 5 | 5 | | | 5 | 5 |
| | Polyether ester | (parts) | | | | | | 5 | | | | 5 | 5 | | |
| | 4,4'-Di-(α,α-dimethylbenzyl)diphenylamine | (parts) | 1.5 | 1.5 | 1.5 | 1.5 | 1.5 | 1.5 | 1.5 | 1.5 | 1.5 | 1.5 | 1.5 | 1.5 | 1.5 |
| | 2-Mercaptobenzoimidazole zinc salt | (parts) | | | | | | | | | | | | | |
| | Stearic acid | (parts) | 1 | 1 | 1 | 1 | 1 | 1 | 1 | 1 | 1 | 1 | 1 | 1 | 1 |
| | Polyoxyethylene alkyl ether phosphoric acid ester | (parts) | 1 | 1 | 1 | 1 | 1 | 1 | 1 | 1 | 1 | 1 | 1 | 1 | 1 |
| | 3-Aminopropyltriethoxysilane | (parts) | | 1 | | 1 | 1 | 1 | | 1 | | 1 | | 1 | |
| | 3-Glycidoxypropyltrimethoxysilane | (parts) | | | | | | | | | | | | | 1 |
| | Vinyltris(2-methoxyathoxy)silane | (parts) | | | | | | | | | | | | | |
| | Diethylene glycol | (parts) | | | | | | | | | | | | | |
| | Trimethylolpropane trimethacrylate | (parts) | | | | | | | | | | | | | |
| | Hexamethylenediamine carbamate | (parts) | 2.4 | 2.4 | 2.4 | 2.4 | 2.7 | 1.9 | 2.4 | 2.4 | 2.7 | 2.7 | 1.9 | 1.9 | 1.9 |
| | 1,8-Diazabicyclo[54.0]-undecene-7 (60% product) | (parts) | 4 | 4 | 4 | 4 | 4 | 4 | 4 | 4 | 4 | 4 | 4 | 4 | 4 |
| | 1,3-Bis(t-butylperoxyisopropyl)benzene (40% product) | (parts) | | | | | | | | | | | | | |
| | | | | | | | | | | | | | | | |

| Original state physical properties | | | | | | | | | | | | | | | |
|---|---|---|---|---|---|---|---|---|---|---|---|---|---|---|---|
| | Tensile strength | (MPa) | 17.9 | 19.2 | 18.5 | 20.6 | 18.3 | 16.1 | 20.5 | 25.3 | 15.4 | 18.8 | 14.7 | 16.3 | 20.6 |
| | Elongation at break | (%) | 280 | 140 | 240 | 120 | 130 | 130 | 360 | 120 | 270 | 100 | 310 | 110 | 160 |
| | Hardness (Duro A) | | 69 | 71 | 70 | 72 | 71 | 72 | 68 | 69 | 69 | 70 | 69 | 70 | 70 |

| Dynamic heat generation test | | | | | | | | | | | | | | | |
|---|---|---|---|---|---|---|---|---|---|---|---|---|---|---|---|
| | Internal HBU | (°C) | 10 | 12 | 13 | 15 | 11 | 14 | 11 | 13 | 12 | 13 | 12 | 13 | 14 |

### Comparative Example 1

A nitrile rubber composition and a cross-linked rubber were prepared in the same manner as in Example 1 except that the silica species was altered from the silica (b1) to the silica (b'4) (trade name "Nipsil ER", BET specific surface area: 111 m²/g, made by Tosoh Silica Corporation), and polyether ester (trade name "Adekacizer RS-700", made by ADEKA Corporation, plasticizer) was used in place of tri-2-ethylhexyl trimellitate, and the evaluations were performed in the same manner as in Example 1. The results thus obtained are shown in Table 2.

### Comparative Example 2

A nitrile rubber composition and a cross-linked rubber were prepared in the same manner as in Example 1 except that as the silica species, the silica (b'5) (trade name "Carplex CS-7", BET specific surface area: 109 m²/g, made by Evonik Degussa GmbH) was used in place of the silica (b1), and the amount of the silica species was altered from 50 parts to 40 parts, and the evaluations were performed in the same manner as in Example 1. The results thus obtained are shown in Table 2.

### Comparative Example 3

A nitrile rubber composition and a cross-linked rubber were prepared in the same manner as in Comparative Example 2 except that as the silica species, the silica (b'6) (trade name "AEROSIL(R) R972V", BET specific surface area: 110 m²/g, made by Nippon Aerosil Co., Ltd.) was used in place of the silica (b'5), and the evaluations were performed in the same manner as in Example 1. The results thus obtained are shown in Table 2.

### Comparative Example 4

A nitrile rubber composition and a cross-linked rubber were prepared in the same manner as in Comparative Example 2 except that the silica species was altered from the silica (b'5) to the silica (b'7) (trade name "ULTRASIL VN2", BET specific surface area: 130 m²/g, made by Evonik Degussa GmbH), and the amount of the silica species was altered from 40 parts to 50 parts, and the evaluations were performed in the same manner as in Example 1. The results thus obtained are shown in Table 2.

### Comparative Example 5

A nitrile rubber composition and a cross-linked rubber were prepared in the same manner as in Comparative Example 4 except that 100 parts of the carboxyl group-containing highly saturated nitrile rubber (a2) obtained in Production Example 2 was used in place of 100 parts of the carboxyl group-containing highly saturated nitrile rubber (a1) obtained in Production Example 1, the amount of the silica (b'7) was altered from 50 parts to 55 parts, and the amount of hexamethylenediamine carbamate was altered from 2.4 parts to 2.7 parts, and the evaluations were performed in the same manner as in Example 1. The results thus obtained are shown in Table 2.

### Comparative Example 6

A nitrile rubber composition and a cross-linked rubber were prepared in the same manner as in Comparative Example 5 except that 1 part of 3-aminopropyltriethoxysilane was mixed, and the evaluations were performed in the same manner as in Example 1. The timing of the addition of 3-aminopropyltriethoxysilane was set at the same time as the addition of the silica (b'7). The results thus obtained are shown in Table 2.

### Comparative Example 7

A nitrile rubber composition and a cross-linked rubber were prepared in the same manner as in Comparative Example 4 except that 100 parts of the carboxyl group-containing highly saturated nitrile rubber (a3) obtained in Production Example 3 was used in place of 100 parts of the carboxyl group-containing highly saturated nitrile rubber (a1) obtained in Production Example 1, the amount of the silica (b'7) was altered from 50 parts to 60 parts, and the amount of hexamethylenediamine carbamate was altered from 2.4 parts to 1.9 parts, and the evaluations were performed in the same manner as in Example 1. The results thus obtained are shown in Table 2.

### Comparative Example 8

A nitrile rubber composition and a cross-linked rubber were prepared in the same manner as in Comparative Example 7 except that 1 part of 3-aminopropyltriethoxysilane was mixed, and the evaluations were performed in the same manner as in Example 1. The timing of the addition of 3-aminopropyltriethoxysilane was set at the same time as the addition of the silica (b'7). The results thus obtained are shown in Table 2.

### Comparative Example 9

A nitrile rubber composition and a cross-linked rubber were prepared in the same manner as in Comparative Example 7 except that 1 part of 3-glycidoxypropyltrimethoxysilane was mixed, and the evaluations were performed in the same manner as in Example 1. The timing of the addition of 3-glycidoxypropyltrimethoxysilane was set at the same time as the addition of the silica (b'7). The results thus obtained are shown in Table 2.

### Comparative Example 10

By using a Banbury mixer, the following ingredients were added to and mixed at 50°C for 5 minutes with 100 parts of the highly saturated nitrile rubber (a'4) obtained in Production Example 4: 50 parts of the silica (b1) (tradename "Nipsil EL", BET specific surface area: 48 m²/g, made by Tosoh Silica Corporation), 5 parts of tri-2-ethylhexyl trimellitate (trade name "Adekacizer C-8", made by ADEKA Corporation, plasticizer), 1 part of vinyltris(2-methoxyethoxy)silane (trade name "A-172", made by Momentive Performance Materials Japan LLC, silane coupling agent), 4 parts of trimethylolpropane trimethacrylate (trade name "Acryester TMP", made by Mitsubishi Rayon Co., Ltd., vulcanization aid), 1.5 parts of 4,4'-di-(α,α-dimethylbenzyl)diphenylamine (trade name "Nocrac CD", made by Ouchi Shinko Chemical Industrial Co., Ltd., antiaging agent), 1 part of 2-mercaptobenzoimidazole zinc salt (trade name "Nocrac MBZ", made by Ouchi Shinko Chemical Industrial Co., Ltd., antiaging agent), 1 part of stearic acid, and 2 parts of diethylene glycol. Next, the obtained mixture was transferred to a roll at 50°C, and 8 parts of a 40% product of 1,3-bis(t-butylperoxyisopropyl)benzene (organic peroxide) (trade name "Vulcup 40KE", made by Hercules, Inc.) was mixed and kneaded with the mixture to obtain a nitrile rubber composition.

Then, by using the obtained cross-linkable rubber composition, a cross-linked rubber was obtained in the same manner as in Example 1 except that the secondary cross-linking conditions were altered in such a way that the temperature was 150°C and the time was 4 hours, and the evaluations were performed in the same manner as in Example 1. The results thus obtained are shown in Table 2.

### Comparative Example 11

A nitrile rubber composition and a cross-linked rubber were prepared in the same manner as in Comparative Example 10 except that the silica species was altered from the silica (b1) to the silica (b'4) (trade name "Nipsil ER", BET specific surface area: 111 m²/g, made by Tosoh Silica Corporation), and the amount of the silica species was altered from 50 parts to 40 parts, and the evaluations were performed in the same manner as in Example 1. The results thus obtained are shown in Table 2.

### Comparative Example 12

A nitrile rubber composition and a cross-linked rubber were prepared in the same manner as in Comparative Example 10 except that the silica species was altered from the silica (b1) to the silica (b'7), and the amount of the silica species was altered from 50 parts to 40 parts, and the evaluations were performed in the same manner as in Example 1. The results thus obtained are shown in Table 2.

### [Table 2]

**Table 2**

| | | | Comparative Examples | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Composition of nitrile rubber composition | | | | | | | | | | | | | | |
| | Carboxyl group-containing highly saturated nitrile rubber (a1) | (parts) | 100 | 100 | 100 | 100 | | | | | | | | |
| | Carboxyl group-containing highly saturated nitrile rubber (a2) | (parts) | | | | | 100 | 100 | | | | | | |
| | Carboxyl group-containing highly saturated nitrile rubber (a3) | (parts) | | | | | | | 100 | 100 | 100 | | | |
| | Highly saturated nitrile rubber (a'4) | (parts) | | | | | | | | | | 100 | 100 | 100 |
| | Silica (b1) "Nipsil EL (specific surface area: 48 m ²/g)" | (parts) | | | | | | | | | | 50 | | |
| | Silica (b2) "Nipsil E-74P (specific surface area: 45 m²/g)" | (parts) | | | | | | | | | | | | |
| | Silica (b3) "Hi-Sil 532EP (specific surface area: 55 m ²/g)" | (parts) | | | | | | | | | | | | |
| | Silica (b'4) "Nipsil ER (specific surface area: 111 m²/g)" | (parts) | 50 | | | | | | | | | | 40 | |
| | Silica (b'5) "Carplex CS-7" (specific surface area: 109 m ²/g)" | (parts) | | 40 | | | | | | | | | | |
| | Silica (b'6) "AEROSIL(R) R972V (specific surface area: 110 m²/g)" | (parts) | | | 40 | | | | | | | | | |
| | Silica (b'7) "ULTRASIL VN2 (specific surface area: 130 m ²/g)" | (parts) | | | | 50 | 55 | 55 | 60 | 60 | 60 | | | 40 |
| | Tri-2-ethylhexyl trimellitate | (parts) | | 5 | 5 | 5 | 5 | 5 | 5 | 5 | 5 | 5 | 5 | 5 |
| | Polyether ester | (parts) | 5 | | | | | | | | | | | |
| | 4,4'-Di-(α,α-dimethylbenzyl)diphenylamine | (parts) | 1.5 | 1.5 | 1.5 | 1.5 | 1.5 | 1.5 | 1.5 | 1.5 | 1.5 | 1.5 | 1.5 | 1.5 |
| | 2-Mercaptobenzoimidazole zinc salt | (parts) | | | | | | | | | | 1 | 1 | 1 |
| | Stearic acid | (parts) | 1 | 1 | 1 | 1 | 1 | 1 | 1 | 1 | 1 | 1 | 1 | 1 |
| | Polyoxyethylene alkyl ether phosphoric acid ester | (parts) | 1 | 1 | 1 | 1 | 1 | 1 | 1 | 1 | 1 | | | |
| | 3-Aminopropyltriethoxysilane | (parts) | | | | | | 1 | | 1 | | | | |
| | 3-Glycidoxypropyltrimethoxysilane | (parts) | | | | | | | | | 1 | | | |
| | Vinyltris(2-methoxyethoxy)silane | (parts) | | | | | | | | | | 1 | 1 | 1 |
| | Diethylene glycol | (parts) | | | | | | | | | | 2 | 2 | 2 |
| | Trimethylolpropane trimethacrylate | (parts) | | | | | | | | | | 4 | 4 | 4 |
| | Hexamethylenediamine carbamate | (parts) | 2.4 | 2.4 | 2.4 | 2.4 | 2.7 | 2.7 | 1.9 | 1.9 | 1.9 | | | |
| | 1,8-Diazabicyclo[5.4.0]-undecene-7 (60% product) | (parts) | 4 | 4 | 4 | 4 | 4 | 4 | 4 | 4 | 4 | | | |
| | 1,3-Bis(t-butylperoxyisopropyl)benzene (40% product) | (parts) | | | | | | | | | | 8 | 8 | 8 |

| Original state physical properties | | | | | | | | | | | | | | |
|---|---|---|---|---|---|---|---|---|---|---|---|---|---|---|
| | Tensile strength | (MPa) | 24.5 | 23.4 | 27.1 | 26.1 | 22.0 | 16.4 | 21.3 | 14.2 | 21.2 | 19.5 | 21.2 | 19.8 |
| | Elongation at break | (%) | 300 | 130 | 340 | 300 | 200 | 90 | 240 | 100 | 160 | 170 | 150 | 130 |
| | Hardness (Duro A) | | 73 | 74 | 74 | 73 | 75 | 74 | 75 | 73 | 77 | 75 | 75 | 75 |

| Dynamic heat generation test | | | | | | | | | | | | | | |
|---|---|---|---|---|---|---|---|---|---|---|---|---|---|---|
| | Internal HBU | (°C) | 28 | 35 | 45 | 47 | 47 | 46 | 49 | 48 | 47 | 51 | 60 | 60 |

As can be seen from the results shown in Table 1, the cross-linked rubbers obtained by using the nitrile rubber compositions each comprising an α,β-ethylenically unsaturated nitrile monomer unit in a content of 5 to 60 wt%, a carboxyl group-containing highly saturated nitrile rubber (a) having an iodine value of 120 or less, a silica (b) having a specific surface area of 70 m²/g or less, and a polyamine-based cross-linking agent (c) in an amount predetermined by the present invention were good in tensile strength, elongation at break, and hardness, and additionally, in the heat generation test, small in the internal heat generation (internal HBU), and excellent in the dynamic heat generation (the dynamic heat generation was small) (Examples 1 to 13). In particular, in Examples 1 to 13, by combining the carboxyl group-containing highly saturated nitrile rubber (a) with the silica (b) having a specific surface area of 70 m²/g or less, the internal heat generation was made remarkably small and the dynamic heat generation property was extremely excellent, as compared with the cases (Comparative Examples 1 to 9, 11 and 12) where the silica (b) having a specific surface area exceeding 70 m²/g, and as compared with the cases (Comparative Examples 10 to 12) where nitrile rubbers substantially not containing carboxyl groups were used. Moreover, in Examples 2, 4 to 6, 8, 10, 12 and 13, by using the silane coupling agent (d) in addition to the silica (b) having a specific surface area of 70 m²/g or less, the tensile strength was able to be more improved while the internal heat generation was being reduced. From this result, the cross-linked rubber obtained by using the nitrile rubber composition of the present invention can be said to be particularly suitable for the rubber components to be used in vibrating portions.

On the other hand, in the cases where the silica (b) having a specific surface area exceeding 70 m²/g was used, the obtained cross-linked rubbers were large in the internal heat generation and poor in the internal heat generation property (large in the dynamic heat generation) (Comparative Examples 1 to 9, 11 and 12).

In addition, in the cases where the nitrile rubbers substantially not containing carboxyl groups were used, the obtained cross-linked rubbers were large in the internal heat generation, and poor in the dynamic heat generation property (large in the dynamic heat generation) (Comparative Examples 10 to 12). In particular, the internal heat generation was the largest in the cases where a nitrile rubber substantially not containing carboxyl groups was used as the nitrile rubber and the silica (b) having a specific surface area exceeding 70 m²/g were used (Comparative Examples 11, 12) .

As described above, according to the present invention, it is possible to obtain a cross-linked rubber being small in dynamic heat generation while the original state physical properties are being allowed to be good; for example, such an effect of the present invention is obvious from a comparison of Example 1 and Comparative Examples 1 and 4 with Comparative Example 10 and Comparative Examples 11 and 12.

Specifically, Example 1 and Comparative Examples 1 and 4 all used the carboxyl group-containing highly saturated nitrile rubber (a) specified by the present invention; Example 1 used a silica having a specific surface area of 48 m²/g, Comparative Example 1 used a silica having a specific surface area of 111 m²/g, and Comparative Example 4 used a silica having a specific surface area of 130 m²/g. As can be seen from a comparison of Comparative Example 1 with Example 1, the use of the silica having a specific surface area of 48 m²/g in place of the silica having a specific surface area of 111 m²/g resulted in an internal heat generation decrease of 18. As can be seen from a comparison of Comparative Example 4 with Example 1, the use of the silica having a specific surface area of 48 m²/g in place of the silica having a specific surface area of 130 m²/g resulted in an internal heat generation decrease of 37.

On the other hand, Comparative Example 10 and Comparative Examples 11 and 12 all used the nitrile rubber (the highly saturated nitrile rubber (a'4)) substantially not containing carboxyl groups; Comparative Example 10 used the silica having a specific surface area of 48 m²/g, Comparative Example 11 used the silica having a specific surface area of 111 m²/g, and Comparative Example 12 used the silica having a specific surface area of 130 m²/g. As can be seen from a comparison of such Comparative Example 10 with Comparative Example 11, although the silica having a specific surface area of 48 m²/g was used in place of the silica having a specific surface area of 111 m²/g, the decrease of the internal heat generation was 9. Similarly, as can be seen from a comparison of Comparative Example 10 with Comparative Example 12, although the silica having a specific surface area of 48 m²/g was used in place of the silica having a specific surface area of 130 m²/g, the decrease of the internal heat generation was 9.

In other words, when the nitrile rubber not containing carboxyl groups was used, the decrease of the internal heat generation was as small as 9, but when the carboxyl group-containing highly saturated nitrile rubber (a) was used, the decrease of the internal heat generation was as large as 18 (from a comparison of Example 1 with Comparative Example 1), and was as large as 37 (from a comparison of Example 1 with Comparative Example 4).

From the above-described results, it can be verified that by using in combination the carboxyl group-containing highly saturated nitrile rubber (a) and the silica (b) having a specific surface area of 70 m²/g or less, as in the present invention, the synergetic effect of these materials makes it possible to remarkably decrease the internal heat generation.

## Claims

1. A nitrile rubber composition comprising
a carboxyl group-containing highly saturated nitrile rubber (a) containing an α,β-ethylenically unsaturated nitrile monomer unit in a content of 5 to 60 wt% and having an iodine value of 120 or less, a silica (b) having a specific surface area of less than 60 m²/g, a polyamine-based cross-linking agent (c), and a trimellitic acid-based plasticizer, wherein
a content of the polyamine-based cross-linking agent (c) is 0.1 to 20 parts by weight with respect to 100 parts by weight of the carboxyl group-containing highly saturated nitrile rubber (a).

2. The nitrile rubber composition according to claim 1, wherein the silica (b) is a synthetic silica.

3. The nitrile rubber composition according to claim 1 or 2, wherein a content of the silica (b) is 10 to 100 parts by weight with respect to 100 parts by weight of the carboxyl group-containing highly saturated nitrile rubber (a).

4. The nitrile rubber composition according to any one of claims 1 to 3, wherein the carboxyl group-containing highly saturated nitrile rubber (a) contains 5 to 60 wt% of an α,β-ethylenically unsaturated nitrile monomer unit, 0.1 to 30 wt% of an α,β-ethylenically unsaturated dicarboxylic acid monoester monomer unit, and 10 to 80 wt% of a conjugated diene monomer unit.

5. The nitrile rubber composition according to any one of claims 1 to 4, further comprising a basic cross-linking accelerator.

6. The nitrile rubber composition according to any one of claims 1 to 5, further comprising a silane coupling agent (d).

7. A cross-linked rubber obtained by cross-linking the nitrile rubber composition according to any one of claims 1 to 6.

## Patentansprüche

1. Eine Nitrilkautschuk-Zusammensetzung, umfassend
einen Carboxylgruppen-haltigen hochgradig gesättigten Nitrilkautschuk (a), der eine α,β-ethylenisch ungesättigte Nitrilmonomereinheit in einem Gehalt von 5 bis 60 Gew.-% enthält und eine lodzahl von 120 oder weniger aufweist, ein Siliziumdioxid (b) mit einer spezifischen Oberfläche von weniger als 60 m²/g, ein Vernetzungsmittel auf Polyaminbasis (c) und einen Weichmacher auf Trimellitsäurebasis, wobei
ein Gehalt des Vernetzungsmittels auf Polyaminbasis (c) 0,1 bis 20 Gewichtsteile, bezogen auf 100 Gewichtsteile des Carboxylgruppen-haltigen hochgradig gesättigten Nitrilkautschuks (a), beträgt.

2. Die Nitrilkautschuk-Zusammensetzung nach Anspruch 1, wobei das Siliziumdioxid (b) ein synthetisches Siliziumdioxid ist.

3. Die Nitrilkautschuk-Zusammensetzung nach Anspruch 1 oder 2, wobei ein Gehalt an dem Siliziumdioxid (b) 10 bis 100 Gewichtsteile, bezogen auf 100 Gewichtsteile des Carboxylgruppen-haltigen hochgradig gesättigten Nitrilkautschuks (a), beträgt.

4. Die Nitrilkautschuk-Zusammensetzung nach einem der Ansprüche 1 bis 3, wobei der Carboxylgruppen-haltige hochgradig gesättigte Nitrilkautschuk (a) 5 bis 60 Gew.-% einer α,β-ethylenisch ungesättigten Nitrilmonomereinheit, 0,1 bis 30 Gew.-% einer α,β-ethylenisch ungesättigten Dicarbonsäuremonoester-Monomereinheit und 10 bis 80 Gew.-% einer konjugierten Dien-Monomereinheit enthält.

5. Die Nitrilkautschuk-Zusammensetzung nach einem der Ansprüche 1 bis 4, ferner umfassend einen basischen Vernetzungsbeschleuniger.

6. Die Nitrilkautschuk-Zusammensetzung nach einem der Ansprüche 1 bis 5, ferner umfassend ein Silan-Kupplungsmittel (d).

7. Ein vernetzter Kautschuk, erhalten durch Vernetzung der Nitrilkautschuk-Zusammensetzung nach einem der Ansprüche 1 bis 6.

## Revendications

1. Composition de caoutchouc nitrile comprenant
un caoutchouc nitrile (a) hautement saturé contenant des groupes carboxyles contenant une unité monomère de nitrile α,β-éthyléniquement insaturé en une teneur de 5 à 60 % en poids et ayant un indice d'iode de 120 ou moins, une silice (b) ayant une surface spécifique de moins de 60 m²/g, un agent de réticulation à base de polyamine (c), et un plastifiant à base d'acide triméllitique, dans laquelle
une teneur de l'agent de réticulation à base de polyamine (c) est de 0,1 à 20 parties en poids par rapport à 100 parties en poids du caoutchouc nitrile (a) hautement saturé contenant des groupes carboxyles.

2. Composition de caoutchouc nitrile selon la revendication 1, dans laquelle la silice (b) est une silice synthétique.

3. Composition de caoutchouc nitrile selon la revendication 1 ou 2, dans laquelle une teneur de la silice (b) est de 10 à 100 parties en poids par rapport à 100 parties en poids du caoutchouc nitrile (a) hautement saturé contenant des groupes carboxyles.

4. Composition de caoutchouc nitrile selon l'une quelconque des revendications 1 à 3, dans laquelle le caoutchouc nitrile (a) hautement saturé contenant des groupes carboxyles contient 5 à 60 % en poids d'une unité monomère de nitrile α,β-éthyléniquement insaturé, 0,1 à 30 % en poids d'une unité monomère de monoester d'acide dicarboxylique α,β-éthyléniquement insaturé, et 10 à 80 % en poids d'une unité monomère de diène conjugué.

5. Composition de caoutchouc nitrile selon l'une quelconque des revendications 1 à 4, comprenant en outre un accélérateur de réticulation basique.

6. Composition de caoutchouc nitrile selon l'une quelconque des revendications 1 à 5, comprenant en outre un agent de couplage de silane (d).

7. Caoutchouc réticulé obtenu par réticulation de la composition de caoutchouc nitrile selon l'une quelconque des revendications 1 à 6.
